(19) Europäisches Patentamt
European Patent Office
Office européen des brevets

(11) **EP 2 735 357 B1**

(12) **EUROPEAN PATENT SPECIFICATION**

(45) Date of publication and mention of the grant of the patent:
**08.04.2020 Bulletin 2020/15**

(21) Application number: **12836776.0**

(22) Date of filing: **28.09.2012**

(51) Int Cl.:
*B01D 63/10* [(2006.01)]   *B01D 69/10* [(2006.01)]
*B01D 69/12* [(2006.01)]

(86) International application number:
**PCT/JP2012/075071**

(87) International publication number:
**WO 2013/047744 (04.04.2013 Gazette 2013/14)**

(54) **SEPARATION MEMBRANE AND SEPARATION MEMBRANE ELEMENT**

TRENNMEMBRAN UND TRENNMEMBRANELEMENT

MEMBRANE DE SÉPARATION ET ÉLÉMENT DE MEMBRANE DE SÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 JP 2011214219**
**02.12.2011 JP 2011264503**

(43) Date of publication of application:
**28.05.2014 Bulletin 2014/22**

(73) Proprietor: **Toray Industries, Inc.**
**Tokyo 103-8666 (JP)**

(72) Inventors:
• **HIROZAWA, Hiroho**
**Otsu-shi**
**Shiga 520-8558 (JP)**
• **KOIWA, Masakazu**
**Otsu-shi**
**Shiga 520-8558 (JP)**
• **TAKAGI, Kentaro**
**Otsu-shi**
**Shiga 520-8558 (JP)**
• **OKAMOTO, Yoshiki**
**Otsu-shi**
**Shiga 520-8558 (JP)**

• **YAMADA, Hiroyuki**
**Otsu-shi**
**Shiga 520-8558 (JP)**
• **HAMADA, Tsuyoshi**
**Otsu-shi**
**Shiga 520-8558 (JP)**
• **OTO, Katsufumi**
**Otsu-shi**
**Shiga 520-8558 (JP)**
• **KIMURA, Masahiro**
**Otsu-shi**
**Shiga 520-8558 (JP)**

(74) Representative: **Hoefer & Partner Patentanwälte mbB**
**Pilgersheimer Straße 20**
**81543 München (DE)**

(56) References cited:
EP-A1- 2 002 880    EP-A2- 0 081 182
EP-A2- 1 059 114    WO-A1-2011/105278
JP-A- H03 249 907    JP-A- H03 504 820
JP-A- 2006 247 629    JP-A- 2011 005 455
JP-A- 2011 092 905    US-A- 5 804 280
US-A1- 2004 226 886

EP 2 735 357 B1

**Description**

[Technical Field]

This invention relates to a separation membrane and a separation membrane element for separating components in a fluid such as liquid or gas.

[Background Art]

In the technology of removing ionic substance from sea water, brine, and the like, use of separation by the separation membrane element has recently expanded as a process for saving energy and resources. The separation membrane used in the separation by the separation membrane element is classified into precision filtration membrane, ultrafiltration membrane, nanofiltration membrane, reverse osmosis membrane, and forward osmosis membrane depending on the pore diameter and separation function. These membranes are used, for example, in the production of drinking water from sea water, brine, or water containing harmful substance, production of industrial ultrapure water, wastewater treatment and recovery of valuables, and the like, and suitable membranes are used depending on the target component to be separated and separation performance.

Separation membrane elements are used in a variety of forms, while they all share a common feature that the raw water is supplied to one surface of the separation membrane and the water which has permeated through the separation membrane is obtained on the other surface. Also, separation membrane elements are formed to thereby increase the membrane area per element, namely, to increase the amount of fluid permeating through one separation membrane element by incorporating many separation membranes bundled together in the element. Under such situation, separation membrane elements of various forms have been proposed depending on the intended use and object, and exemplary separation membrane elements include spiral elements, hollow fiber elements, plate and frame elements, rotating plane elements, laminated plane elements.

For example, spiral separation membrane elements are widely used for reverse osmosis filtration. The spiral separation membrane element comprises a central tube and a laminate wound around the central tube. The laminate is formed by laminating a flow path member on the supply side for supplying the raw water (the water to be treated) to the surface of the separation membrane, the separation membrane which separates the components in the raw water, and the flow path member on the permeation side for guiding the fluid which has permeated through the membrane and which has been separated from the fluid on the supply side to the central tube. This spiral separation membrane element is widely used by reason of having the merit that the element can take out a large amount of permeated water because pressure can be applied to the raw water in the element.

In the spiral separation membrane element, a polymer net is mainly used for the flow path member of the supply side for the formation of the flow path of the fluid on the supply side, and a laminate-type separation membrane is used for the separation membrane. The laminate-type separation membrane is a separation membrane comprising a laminate of a separation functional layer comprising a crosslinked polymer such as polyamide, a porous resin layer comprising a polymer such as polysulfone, and a nonwoven fabric comprising a polymer such as polyethylene terephthalate, which have been laminated from the supply side to the separation side in this order. The flow path member used for the permeation side is a member of a knitted fabric called tricot which has a fluid path interval smaller than the flow path member on the supply side. Such tricot member is used for the purpose of forming the flow path member on the permeation side while preventing the depression of the separation membrane.

With the recent growing demands for the reduction of the water production cost, membrane elements are required to have a higher performance, and in view of such situation, various improvements in the performance of separation membrane element members have been proposed for the improvement of the separation performance of the separation membrane element and increase in the amount of the fluid permeating through the membrane element per unit area.

More specifically, Patent Document 1 proposes an element using a sheet member provided with surface irregularities for the flow path member on the permeation side. Patent Document 2 proposes an element having a separation membrane sheet comprising a porous support provided with surface irregularities and a separation active layer, wherein use of a net or the like for the flow path member on the supply side and a tricot or the like for the flow path member on the permeation side are no longer necessary. Patent Document 3 teaches a composite structure which comprises a porous filter medium, a substrate provided with at least one drainage pathway, and a support and drainage medium sandwiched between the porous filter medium and the substrate. The porous filter medium, the support and drainage medium, and the substrate are bonded free of any adhesive.

Patent Document 4 teaches a liquid separation device capable of suppressing the lowering of filtration function due to an increase in flow channel resistance of permeated liquid resulting from that a separation membrane falls in a groove of a permeated liquid flow channel material, and breakage of the separation membrane surface accompanied thereby, a permeated liquid flow channel material disposed on the back side of a separation membrane is composed of a sheet-like material that a linear groove and a linear crest are alternately arrayed on one surface or both surfaces, wherein a groove width of the linear groove in the sheet-like material is 10 to 200 $\mu$m, and a ratio of the groove width of the linear groove to the pitch of the linear groove is 0.45 or more.

Patent Document 5 discloses a film, in particular for separating liquid or gaseous multicomponent systems, which is comprised of a sheet-like semipermeable membrane applied to a support layer which is smooth on both sides and permeable to media capable of flow, wherein the surface of the film which faces away from the smooth support layer has profiling generated by profile-imparting elements which are comprised of threads having a circular or rectangular cross-section and being arranged parallel to one another. Patent Document 6 discloses a method of manufacturing a degassing membrane easily manufacturable with an easily stabilizable form of a liquid flow path, and a degassing device manufactured by the method. The degassing membrane is manufactured by forming a protrusion part to a first air permeating membrane by discharging hot melt resin on the first air permeating membrane, hardening the resin of the protrusion part, and forming a second air permeating membrane on the first air permeating membrane to cover the protrusion part.

[Prior Art Document]

[Patent Document]

[Patent Document 1] Japanese Patent Application Laid-Open No. 2006-247453
[Patent Document 2] Japanese Patent Application Laid-Open No. 2010-99590
[Patent Document 3] US 5804280 A
[Patent Document 4] EP 2002880 A1
[Patent Document 5] EP 0081182 A2
[Patent Document 6] JP 2011-092905 A

[Summary of the Invention]

[Problem to Be Solved by the Invention]

The separation membrane elements as described above are insufficient in the improvement of the performance, and in particular, in the stability of the performance in the case of long term operation.

Accordingly, an object of the present invention is to provide a separation membrane and a separation membrane element exhibiting improved stability in the separation and removal performance particularly when the separation membrane element is operated at a high pressure.

[Means for Solving the Problems]

In order to achieve the object as described above, the separation membrane of the present invention, which is defined in the appended claims, comprises a separation membrane sheet at least comprising a substrate and a separation functional layer, and a plurality of flow path members having a composition different from both, the composition of the substrate and the composition of the separation functional layer, wherein the plurality of flow path members are impregnated into the substrate on the side opposite in thickness direction to the separation functional layer, and the adhesive force between the substrate and each of the flow path members is at least 1 N/m, the adhesive force being measured as follows: a sample having a width of 15 mm comprising the substrate and the flow path member securely fixed to the substrate is prepared, the substrate and the flow path member are partly peeled from each other at the adhesion surface, and the sample is placed on a tensile tester so that the sample will be at T at the measurement length of 150 mm, wherein the tensile test is conducted at a speed of 50 mm per minute and at a temperature of 25°C and a relative humidity of 65%, and the average of the tensile force in the length of the measurement is used for the peel strength, wherein when the substrate is fractured before the peeling in the peeling of the part of the flow path member from the substrate, the adhesive force is evaluated to be at least 1 N/m, wherein a height c, which is a difference in the height between the highest part of the flow path member and the surface on a permeation side of the separation membrane sheet in the cross section perpendicular to a second direction, which is the longitudinal direction of the separation membrane, is at least 0.03 mm and up to 0.4 mm, wherein the height c is the value obtained by measuring the height of the flow path member for at least 30 locations and calculating the average value thereof, wherein a width d of the flow path member is at least 0.2 mm and up to 2 mm, wherein the width d of the flow path member is measured as described below: first, an average of the maximum width and the minimum width of the one flow path member is calculated in one cross section perpendicular to a first direction which is the width direction of the separation membrane, wherein when the flow path member has thinner upper part and thicker lower part, the width of the lower part and the width of the upper part of the flow path member are measured and the average is calculated, wherein such average is calculated for at least 30 cross sections, and arithmetic mean is calculated to thereby determine the width d per one membrane, wherein an interval b, which is an interval between adjacent flow path members and which corresponds to the width of the flow path, is at least 0.2 mm and up to 5 mm, wherein when the width of one flow path is not constant in one cross section, namely, when the side surfaces of the two adjacent flow path members are not parallel, average of the maximum width and the minimum width of one flow path in one cross section is measured to calculate the average, wherein when the flow path member is trapezoid with the shorter upper base and longer lower base in the cross section perpendicular to the second direction, the distance between the upper parts of the adjacent two flow path members and the distance between the lower parts of the adjacent two flow path members are first measured to calculate the average, wherein the interval between the flow path members is measured for the cross section at 30 or more arbitrary locations to calculate the average for each cross section, and then, arithmetic average of the thus obtained average may be calculated to determine the interval b.

This separation membrane can be applied for a separation membrane element. The separation membrane element comprises a water collection tube and the separation membrane, and the separation membrane is arranged so that the width direction of the separation membrane is parallel to the axial direction of the water collection tube, and the separation membrane is wound around the water collection tube.

[Merits of the Invention]

The separation membrane of the present invention is capable of forming highly efficient and stable flow paths on the permeation side.

The separation membrane element of the present invention has the separation membrane wound around the water collection tube so that the width direction of the separation membrane corresponds to axial direction of the water collection tube, and therefore, the resulting separation membrane element is a high performance, high efficiency separation membrane element having a high performance of removing the component to be separated as well as a high permeability performance.

[Brief Description of the Drawings]

FIG. 1 is an exploded perspective view illustratively showing an embodiment of the separation membrane leaf.

FIG. 2 is a plan view showing the separation membrane provided with flow path members which are continuous in longitudinal direction (second direction) of the separation membrane.

FIG. 3 is a plan view showing the separation membrane provided with flow path members which are discontinuous in longitudinal direction (second direction) of the separation membrane (second direction).

FIG. 4 is a cross sectional view of the separation membrane of FIG. 2 and FIG. 3.

FIG. 5 is a developed perspective view of the separation membrane element according to an embodiment.

FIG. 6 is a schematic side view of the separation membrane.

FIG. 7 is a cross sectional view schematically showing the separation membrane sheet.

FIG. 8 is a partially developed perspective view of the separation membrane element according to the first embodiment.

FIG. 9 is a partially developed perspective view of the separation membrane element according to the second embodiment.

FIG. 10 is a partially developed perspective view of the separation membrane element according to the third embodiment.

[Embodiments for Carrying Out the Invention]

Next, an embodiment of the present invention is described in detail.

[1. Separation membrane]

(1-1) Summary of the separation membrane

A separation membrane is the membrane capable of separating the components in the fluid supplied to the surface of the separation membrane and obtaining the permeated fluid which has permeated through the separation membrane. A separation membrane comprises a separation membrane sheet and a plurality of flow path members provided on the separation membrane sheet.

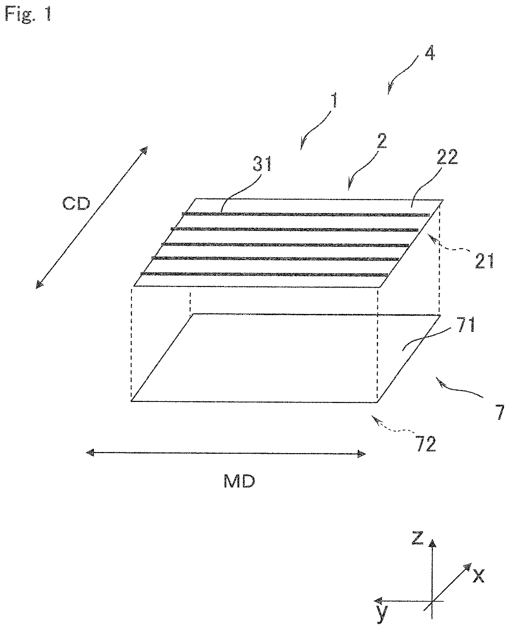

As an example of such separation membrane, FIG. 1 shows an exploded perspective of a separation membrane leaf which is an embodiment of the separation membrane of the present invention.

In FIG. 1, a separation membrane leaf 4 includes a separation membrane 1 and a separation membrane 7 so that surface 21 of the separation membrane 1 on the supply side opposes surface 71 of the separation membrane 7 on the supply side. The separation membrane 1 has a separation membrane sheet 2 and a flow path member 31 provided on the permeation side of the separation membrane sheet 2, and the flow path member 31 is provided on the surface 22 on the permeation side to define the flow paths. Various parts of the separation membrane 1 will be described later in detail. The separation membrane sheet 2 has a surface 21 on the supply side surface and the surface 22 on the permeation side, and the separation membrane 7 has a surface 71 on the supply side, and a surface 72 on the permeation side.

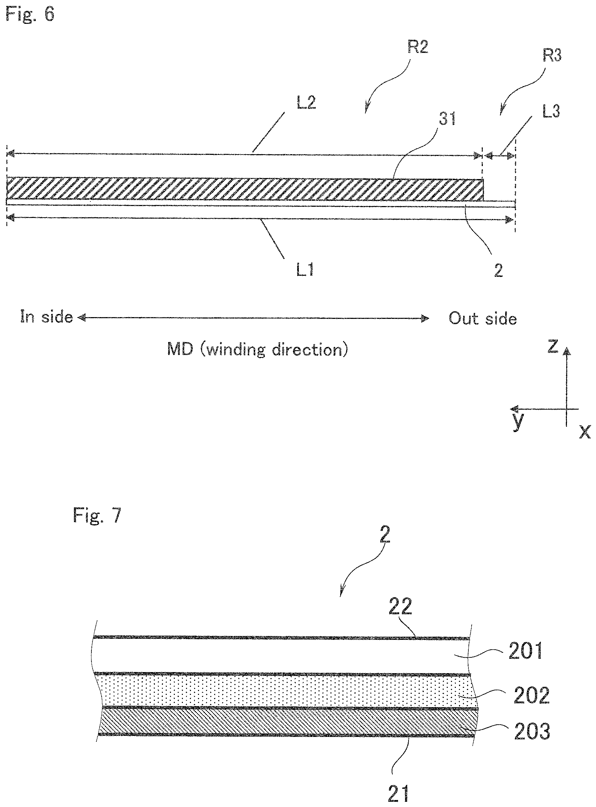

In the specification, the "surface on the supply side" of the separation membrane sheet means the surface on the side where the raw water is supplied of the two surfaces of the separation membrane sheet, and the "surface on the permeation side" means the surface on the opposite side. As will be described later, when the separation membrane sheet has a substrate 201 and a separation functional layer 203 as shown in FIG. 7, the surface on the separation functional layer is generally the surface 21 on the supply side and the surface on the side of the substrate is generally the surface 22 on the permeation side. In FIG. 7, the separation membrane sheet 2 is described as a laminate of the substrate 201, a porous support layer 202, and the separation functional layer 203. As described above, the surface open toward the exterior of the separation functional layer 203 is the surface 21 on the supply side, and the surface open toward the exterior of the substrate 201 is the surface 22 on the permeation side.

The axis such as x axis, y axis, and z axis are shown in the drawings, and the x axis also referred to as the first direction, and the y axis is also referred to as the second direction. As shown in FIG. 1 and other drawings, the separation membrane sheet 2 has a rectangular shape, and the first direction and the second direction are parallel to the outer edge of the separation membrane sheet 2. The first direction is also referred to as the width direction, and the second direction is also referred to as the longitudinal direction. In FIG. 1, the first direction (width direction) is indicated by the arrow of CD, and the second direction (longitudinal direction) is indicated by the arrow of MD.

(1-2) Separation membrane sheet

<Summary>

A membrane having separation performance adapted for the method of use and intended application is used for the separation membrane sheet. While some separation membrane sheets comprise single layer, the separation membrane sheet used in the present invention is a composite membrane at least comprising the separation functional layer and the substrate. As shown in FIG. 7, the composite membrane may have the porous support layer 202 formed between the separation functional layer 203 and the substrate 201.

<Separation functional layer>

Thickness of the separation functional layer is not limited for any particular range. The thickness, however, is preferably at least 5 nm and up to 3000 nm in view of the separation and permeation performance. In the case of a reverse osmosis membrane, a forward osmosis membrane, and a nanofiltration membrane, the thickness is preferably at least 5 nm and up to 300 nm.

The thickness of the separation functional layer may be measured according to the method commonly used for measuring the thickness of a membrane. For example, the separation membrane may be embedded in a resin and ultrathin sections may be prepared by slicing the resin-embedded membrane and the ultrathin sections may be subjected to staining and other treatments. The thus obtained section may be observed by a transmission electron microscope to measure the thickness. When the separation functional layer has a pleated structure, the pleated structure above the porous support layer may be observed at intervals of 50 nm in the direction of the cross-sectional length, and the thickness may be determined from the average of the measurements of 20 pleats.

The separation functional layer may be a layer having both the separation function and the supporting function, or a layer solely having the separation function. The term "separation functional layer" means a layer having at least the separation function.

When the separation functional layer has both the separation function and the supporting function, the separation functional layer may preferably comprise a layer containing cellulose, polyvinylidene fluoride, polyethersulfone, or polysulfone as its main component.

In this specification, the language that "X contains Y as its main component" means that content of the Y in the X is at least 50% by weight, at least 70% by weight, at least 80% by weight, at least 90% by weight, or at least 95% by weight. When two or more components corresponding to the Y are present, total of the content of such components may be in the range as described above.

In the meanwhile, the separation functional layer supported by the porous support layer preferably comprises a crosslinkable polymer in view of the ease of the control of pore diameter and excellent durability. The particularly preferred are a polyamide separation functional layer prepared by polycondensation of a polyfunctional amine and a polyfunctional acid halide and an organic-inorganic hybrid functional layer in view of the high ability of removing the components in the raw water. These separation functional layers may be formed by the polycondensation of the monomer on the porous support layer.

For example, the separation functional layer may contain a polyamide as its main component. Such membrane is formed by interfacial polycondensation of a polyfunctional amine and a polyfunctional acid halide by a known method. For example, an aqueous solution of a polyfunctional amine may be coated on the porous support layer, and excessive aqueous amine solution may be removed by an air knife or the like, and then, the solution of a polyfunctional acid halide in an organic solvent is coated to obtain a polyamide separation functional layer.

The separation functional layer may have an organic-inorganic hybrid structure containing Si element and the like. The separation functional layer having an organic-inorganic hybrid structure may contain, for example, the compounds (A) and (B) as described below.

(A) a silicon compound wherein a hydrolyzable group and a reactive group having an ethylenically unsaturated group are directly bonded to the silicon atom, and
(B) a compound having an ethylenically unsaturated group, which is other than the compound (A) as described above.

More specifically, the separation functional layer may contain the condensation product of the hydrolyzable group of the compound (A) and the polymerization product of the ethylenically unsaturated group of the compound (A) and/or (B). In other words, the separation functional layer may comprise a polymerization product of at least one of:

- a polymerization product formed by condensation and/or polymerization of solely the compound (A),
- a polymerization product formed by polymerization of solely the compound (B), and
- a copolymerization product of the compound (A) and the compound (B).

It is to be noted that the term polymerization products include condensation products, and in the copolymer of the compound (A) and the compound (B), the compound (A) may have been condensed via the hydrolyzable group.

The hybrid structure may be formed by a known method. In an exemplary method used for the formation of the hybrid structure, a reaction solution containing the compound (A) and the compound (B) is coated on the porous support layer, and after removing the excessive reaction solution, a heat treatment is conducted for the condensation of the hydrolyzable group. Exemplary methods used for the polymerization of the ethylenically unsaturated group of the compound (A) and the compound (B) include heat treatment and irradiation by an electromagnetic beam, electron beam, or plasma. In the formation of the separation functional layer, a polymerization initiator, polymerization promoter, and the like may be added for increasing the polymerization speed.

If desired, these separation functional layers may be treated with an alcohol-containing aqueous solution or an alkaline aqueous solution before their use to thereby hydrophilize the membrane surface.

<Porous support layer>

The porous support layer is a layer supporting the separation functional layer, and it may be also referred to as the porous resin layer.

The material and the shape used for the porous support layer are not particularly limited, and the porous support layer may be formed on the substrate by using a porous resin. For example, the porous support layer may comprise polysulfone, cellulose acetate, polyvinyl chloride, epoxy resin, or a laminate or a mixture of such resins, and in view chemical, mechanical, and thermal stability and ease of controlling the pore diameter, use of polysulfone is preferable.

The porous support layer provides the separation membrane with a mechanical strength and it does not have the separation performance like that of the separation membrane for components of small molecular size such as an ion. In addition, the porous support layer is not particularly limited for its pore size or pore distribution, and the porous support layer may have, for example, uniform minute pores, or pores with the size distribution so that the pore size gradually increases from the surface of the side where the separation functional layer is formed to the other side. However, in all cases, the diameter of the circle having the area corresponding to the projected area of the fine pores measured by an atomic force microscope, electron microscope, or the like on the surface of the side where the separation functional layer is formed is preferably at least 1 nm and up to 100 nm. More specifically, the pores of the porous support layer on the surface of the side where the separation functional layer is formed may preferably have a diameter of the circle having the area corresponding to the projected area of at least 3 nm and up to 50 nm in view the reactivity in the interfacial polymerization and supporting of the separation functional layer.

The porous support layer is not particularly limited for its thickness. The thickness, however, is preferably in the range of at least 20 $\mu$m and up to 500 $\mu$m, and more preferably at least 30 $\mu$m and up to 300 $\mu$m for the reason such as strengthening of the separation membrane.

Morphology of the porous support layer can be observed by using a scanning electron microscope, transmission electron microscope, or atomic force microscope. When observed by using a scanning electron microscope, the porous support layer is peeled off from the substrate, and the porous support layer is cut by frozen cracking to produce the sample for the observation of the cross section. This sample is thinly coated with platinum, platinum-palladium, or ruthenium tetrachloride, and preferably with ruthenium tetrachloride, and the sample is observed by using ultra-high resolution field-emission scanning electron microscope (UHR-FE-SEM) at an acceleration voltage of 3 kV to 6 kV. Exemplary ultra-high resolution field-emission scanning electron microscopes include S-900 electron microscope manufactured by Hitachi, Ltd. The thickness and the diameter of the circle corresponding to the circle having the same area as the projected area on the surface of the porous support layer can be measured based on the resulting electron micrograph.

The thickness and the pore diameter of the porous support layer are the average values, and the thickness of the porous support layer is an average of the thickness measured for 20 locations chosen at an interval of 20 $\mu$m in the direction perpendicular to the thickness direction of the cross section prepared for observing the cross section. The pore diameter is an average of the diameter of the circle having the area corresponding to the area of the projected area measured for 200 pores.

Next, the method used for the formation of the porous support layer is described. The porous support layer may be produced by casting the solution of polysulfone in N,N-dimethylformamide (hereinafter referred to as DMF) on the substrate as described below, for example, densely woven polyester fabric or nonwoven fabric to a constant thickness, and the cast resin may be immersed in water for wet solidification.

The porous support layer may be formed by the method described in Office of Saline Waters, Research and Development Progress Report, No. 359 (1968). The concentration of the polymer, temperature of the solvent, and poor solvent may be adjusted to obtain the intended morphology.

For example, a predetermined amount of polysulfone may be dissolved in DMF to prepare a polysulfone resin solution at a predetermined concentration, and this polysulfone resin solution may be coated to a substantially constant thickness on a substrate comprising a polyester fabric or nonwoven fabric. After removing the solvent on the surface of the substrate for a predetermined time in air, the polysulfone may be solidified in a solidificating solution.

<Substrate>

The separation membrane sheet may have a substrate in view of improving strength and size stability of the separation membrane sheet. The substrate used is preferably a fibrous substrate considering the strength, provision of surface irregularity, and fluid permeability.

Both long fiber nonwoven fabric and short fiber nonwoven fabric are preferable for the substrate. In the case of long fiber nonwoven fabric which has excellent membrane forming properties, the solution of the high molecular weight polymer will not permeate through the substrate by the excessive permeation in the casting of the solution, and peeling of the porous support layer, fluffing or the like of the substrate which results in the inconsistency of the membrane, and generation of defects such as pinholes will be suppressed. In addition, when the substrate comprises a long fiber nonwoven fabric comprising a thermoplastic continuous filament, inconsistency caused by the fluffing of the fiber in the casting of the polymer solution and generation of defects can be suppressed to a degree higher than the short fiber nonwoven fabric. Use of the long fiber nonwoven fabric having high size stability for the substrate is also preferable in view of the tension applied to the separation membrane in the direction of the membrane formation during the continuous membrane formation.

The long fiber nonwoven fabric is preferably the one wherein the fibers in the surface layer of the long fiber nonwoven fabric on the side opposite to the porous support layer are more longitudinally oriented than the fibers in the surface layer of the long fiber nonwoven fabric on the side of the porous support layer in view of the shapability and the strength. Such structure contributes for the retaining of the strength and the effect of preventing the membrane rupture is thereby realized, and also, the shaping of the laminate including the porous support layer and the substrate when the surface irregularity is provided with the separation membrane is also improved, and as a consequence, the surface irregularity on the surface of the separation membrane is stabilized.

More specifically, the degree fiber orientation in the surface layer of the long fiber nonwoven fabric on the side opposite to the porous support layer is preferably at least 0° and up to 25°, and difference in the degree of fiber orientation with that of the surface layer of the long fiber nonwoven fabric on the side of the porous support layer is preferably at least 10° and up to 90°.

Production of the separation membrane and production of the element include the step of heating, and this heating is associated with the phenomenon of the shrinkage of the porous support layer or the separation functional layer, and this phenomenon is significant particularly in the width direction which is the direction without the application of the tensile force in the continuous film formation. Such shrinkage is problematic in consideration of the size stability, and the substrate used is preferably the one with low thermal distortion rate. When the difference between the degree of fiber orientation at the surface layer on the side opposite to the porous support layer and the degree of fiber orientation at the surface layer on the side of the porous support layer in the nonwoven fabric is at least 10° and up to 90°, deformation in the width direction by the heat can be suppressed.

The degree of fiber orientation is an index for the orientation of the fiber in the nonwoven fabric substrate constituting the porous support layer. More specifically, the degree of fiber orientation is the average of the angle between the direction of the film formation in the continuous film formation, namely, the angle between the axial direction of the nonwoven fabric substrate and the longitudinal direction of the fibers constituting the nonwoven fabric substrate. In other words, the degree of fiber orientation is 0° when the longitudinal direction of the fibers is parallel to the direction of the film formation. While the degree of fiber orientation is 90° when the longitudinal direction of the fibers is perpendicular to the direction of the film formation, namely, when the longitudinal direction of the fibers is parallel to the width direction of the nonwoven fabric substrate. Accordingly, the fiber is more longitudinally oriented when the degree of fiber orientation is nearer to 0°, and more laterally oriented when the degree of fiber orientation is nearer to 90°.

The degree of fiber orientation is measured, first, by randomly collecting 10 small samples from the nonwoven fabric, taking pictures of the sample surface by using a scanning electron microscope at a magnification of 100 to 1000, choosing 10 fibers from each sample, and measuring the angle of the longitudinal direction of the fiber when the axial direction of the nonwoven fabric is 0°. In the specification, the axial direction of the nonwoven fabric indicates the "machine direction" in the production of the nonwoven fabric, and the axial direction of the nonwoven fabric corresponds to the film formation direction of the porous support layer and the "MD" in the drawing. The direction of the "CD" in the drawing corresponds to the "cross direction" in the formation of the nonwoven fabric.

The angle is thus measured for 100 fibers per nonwoven fabric, and the average is calculated for the angle of the longitudinal direction for the 100 fibers. The resulting average is rounded to the first decimal place, and the value obtained is the degree of fiber orientation.

Thickness of the substrate is such that total thickness of the substrate and the porous support layer is in the range of at least 30 $\mu$m and up to 300 $\mu$m, or in the range of at least 50 $\mu$m and up to 250 $\mu$m.

<Density of the substrate>

The density of the substrate may be adequately selected depending on the usage of the separation membrane and the like. The density, however, is preferably at least 0.2 g/cm$^3$ and up to 0.9 g/cm$^3$. A substrate with smaller density allows impregnation of the flow path member on the permeation side, and the flow path member on the permeation side can be fixedly secured to the substrate. Both the strength required for the substrate of the separation membrane and the fixed securing of the flow path member on the permeation side of the substrate can be simultaneously fulfilled when the density is within such range.

(1-3) Flow path member on the permeation side

<Summary>

On the surface of the separation membrane sheet on the permeation side, the flow path members are fixedly secured on the substrate surface by themselves. The flow path members on the permeation side have a composition different from the substrate, and the flow path is formed by the flow path members fixedly secured to the surface of the substrate on the side opposite (in the thickness direction of the substrate) to the separation functional layer by the adhesive force of at least 1 N/m. "Formation of the flow path on the side of the permeation side" means that a flow path is formed so that the fluid that has permeated through the separation membrane sheet reaches the water collection tube when the separation membrane is incorporated in the separation membrane element. Constitution of the flow path members is as described below in detail.

<Adhesive force of the flow path members>

For suppressing the peeling between the substrate and the flow path members by the stress applied to the flow path members during the handling of the separation membrane in the production of the separation membrane element, the adhesive force between each of the flow path members and the part of the substrate where the flow path member is fixedly secured is at least 1 N/m, preferably at least 10 N/m, and most preferably at least 30 N/m. Such adhesive force between the substrate and one of the flow path members is measured according to the method described in ISO 4578:1997, and the adhesive force measured by the method in the Example as described below should at least be within such range. The term "adhesion" means only the adhesion of the flow path member alone and does not include contact of the adhesive used in the preparation of the separation membrane leaf or the envelope membrane with the flow path member.

When a flow path member is peeled off from the substrate in the measuring of the adhesive force at the position where the flow path member is secured, a part of the substrate may become peeled off with the flow path member. In the case of such simultaneous peeling of the substrate, the value measured in such measurement is regarded as the adhesive force.

<Impregnation of the flow path member to the substrate>

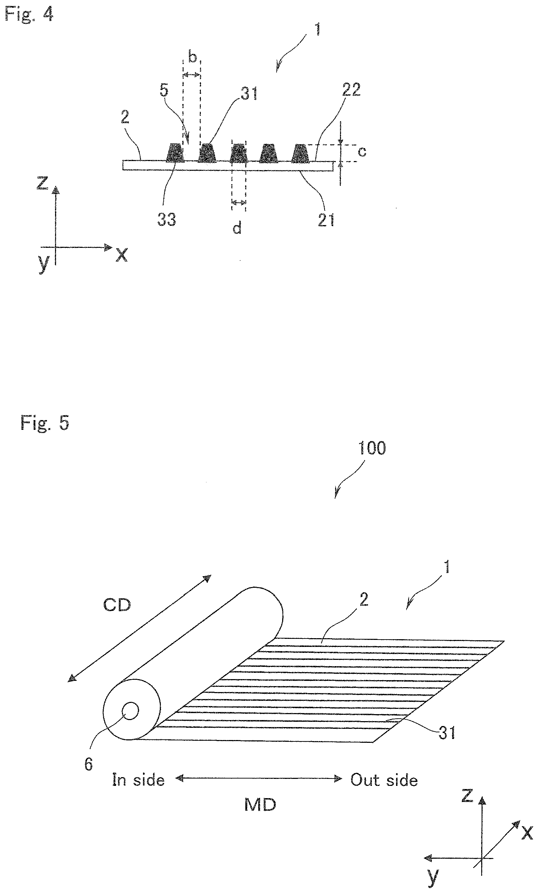

The components of the flow path member, i.e. the flow path member is/are impregnated into the separation membrane, and more specifically, in the substrate. When the flow path members are placed on the separation membrane on the side of the substrate, namely, on the side of the permeation side, and the heated from the side of the substrate by hot melting or the like, impregnation of the flow path members from the rear side toward the front side of the separation membrane is promoted. Adhesion of the flow path members and the substrate becomes firm with the progress of the impregnation, and the peeling of the flow path members from the substrate will be less likely to occur. In FIG. 4, the part in the substrate where the flow path members are impregnated is indicated as the "impregnated area 33".

In FIG. 4, a plurality of flow path members 31 of the permeation side are provided on the surface 22 of the separation membrane sheet 2 on the permeation side, and the flow path 5 of the permeation side is defined between the flow path members 31 of the permeation side. The flow path member 31 of the permeation side has immersed into the interior of the separation membrane sheet 2 from the permeation side surface 22 to form the impregnated area 33.

However, when the components of the flow path member have impregnated into the substrate as far as near the separation functional layer, the flow path member that has impregnated breaks the separation functional layer during the filtration under pressure. Accordingly, if the components of the flow path member impregnate into the substrate, the ratio of the impregnation thickness of the flow path member to the substrate thickness (namely, the rate of impregnation) is preferably in the range of at least 5% and up to 95%, more preferably in the range of at least 10% and up to 80%, and still more preferably in the range of at least 20% and up to 60%. It is to be noted that the "impregnation thickness" means the maximum impregnation thickness of the flow path member, and the "maximum impregnation thickness of the flow path member" means the maximum value of the thickness of the impregnated area corresponding to the flow path member in one cross section.

The impregnation thickness of the flow path members may be adjusted, for example, by changing the type of the material constituting the flow path members (and more specifically, the type of the resin) and/or the amount of the material. The impregnation thickness can also be adjusted by changing the temperature and the like used in the processing when the flow path members are provided by the hot melting.

It is to be noted that the impregnation of the flow path members to the substrate can be confirmed by subjecting the impregnated area of the flow path members to the thermal analysis such as differential scanning calorimetry, and if a peak corresponding to the components of the flow path members are obtained differently from the peak corresponding to the substrate.

The rate of the impregnation of the flow path members to the substrate may be determined by observing the cross section of the separation membrane where the flow path members are present by a scanning electron microscope, transmission electron microscope, or atomic force microscope, and calculating the thickness of the flow path members impregnation and the thickness of the substrate. For example, when the observation is conducted by using a scanning electron microscope, the separation membrane is cut in the depth direction with the flow path members to observe the cross section with the scanning electron microscope and measure the thickness of the flow path member impregnation and the thickness of the substrate. The rate of the impregnation may be calculated by determining the ratio of the maximum flow path member impregnation thickness (thickness of the part where the flow path member has most deeply impregnated in the substrate) to the thickness of the substrate. The "substrate thickness" in the measurement of the impregnation depth is the thickness of the substrate at the same position as the position where the maximum flow path member impregnation has been measured (see FIG. 4). In FIG. 4, the arrow indicating the substrate thickness and the arrow indicating the maximum impregnation thickness are separately depicted for the convenience of the explanation.

While the separation membrane of FIG. 4 has the substrate, the porous support layer, and the separation functional layer, the present invention is not limited to such embodiment.

<Density of the flow path member>

When the flow path members function as the flow path members on the permeation side, the flow path members are required to have a pressure resistance for retaining the flow path of the permeation side during the filtration under pressure. When the density is low, namely, when many voids are present in the flow path members, pressure resistance of the flow path members is likely to be low. The density of the flow path members may be altered depending on the way how the separation membrane is used, and the density, for example, is preferably higher than the density of the substrate of the area where the flow path members are not adhered. The density of the flow path members is also preferably at least 0.90 g/cm$^3$, and in view of the flowability of the molten resin, the pressure resistance as well as movability and permeability in the substrate as described below will be improved. For the same reason, the flow path members may preferably have a density higher than the density of the substrate.

<Coefficient of static friction>

When an element, and in particular, a spiral element is produced by using the separation membrane having the flow path members fixedly secured to the nonwoven fabric is used, the step of laminating the separation membrane and winding the laminate is conducted so that the supply side surface of the separation membrane faces with one another, and the permeation side surface of the separation membrane faces one another. Such winding of the separation membrane results in the displacement of the separation membranes, and a stress is generated between the separation membranes. Accordingly, the friction between the separation membranes is preferably small, since excessive frictional force may result in the stress that leads to the breakage of the separation membrane. Accordingly, coefficient of static friction between the flow path member and the separation membrane in contact with the flow path member, namely, the coefficient of static friction between the flow path member and the opposing substrate of the separation membrane is preferably up to 3.5, more preferably up to 1.5, and most preferably up to 0.7 irrespective of the water content of the separation membrane. In other words, when the coefficient of static friction between the flow path member and its opposing substrate surface on the permeation side of the separation membrane is within such range, a separation membrane element with good separation membrane windability with reduced defects can be obtained.

Friction of the flow path member to the substrate may be reduced by using a known method, and the contact surface of the flow path member with the substrate may be smoothened by various processing or by adding a wax to the resin constituting the flow path member. Exemplary waxes include Sasol wax (Fischer-Tropsch wax) and carnauba wax, ceresin wax, ozokerite wax, montan wax, bleached montan wax, purified beeswax, which may be used alone or as a blend of two or more.

<The component constituting the flow path member>

The flow path members 31 preferably are made of a material different from the separation membrane sheet 2. The material different from the separation membrane sheet 2 means a material having a composition different from the material used for the separation membrane sheet 2. More specifically, the composition of the flow path members 31 is preferably different from the composition of the surface of the separation membrane sheet 2 having the flow path members 31 formed, and the composition of the flow path members 31 is also preferably different from the composition of all layers of the separation membrane sheet 2.

The material constituting the flow path members is not particularly limited while use of a resin is preferable. Exemplary preferable resins include polyolefins and olefin copolymers such as ethylene - vinyl acetate copolymer resin, polyethylene, and polypropylene in view of chemical resistance. Polymers such as urethane resin and epoxy resin may also be used as a material for constituting the flow path member while these polymers are somewhat inferior in the adhesion compared to the polyolefins and olefin copolymers as mentioned above. These resins may be used alone or in combination of two or more. Of these, thermoplastic resins are suitable for the formation of a flow path member having uniform shape due to the ease of molding.

It is also preferable to add a viscosity reducing agent such as a wax to the polymer constituting the flow path members for promoting the impregnation into the substrate to thereby increase the adhesive force of the flow path members to the substrate. It is also preferable to add an additive such as an adhesive component (for example, a tackifyer) to the substrate to thereby increase surface free energy of the molten resin which would be the flow path members and realize the adhesive force adequate for the material of the substrate. By adjusting the surface free energy of the flow path members in this way, it is possible to realize the adhesive force corresponding to the material of the substrate. Use of a material with small difference between the SP value (solubility parameter) and the SP value of the substrate for the material of the flow path members is also effective in improving the adhesion between the flow path members and the substrate. More specifically, the difference between the SP value of the main component of the flow path members and the SP value of the main component of the substrate is preferably up to 3, and more preferably up to 2.

It is to be noted that the substrate may be treated with a primer before fixedly securing the flow path members to the substrate.

<Shape and arrangement of the flow path member>

«Summary»

Tricot which has been widely used is a knitted material comprising three dimensionally crossing fibers. In other words, the tricot has a two dimensionally continuous structure. When such tricot is used for the flow path members, height of the flow path will be smaller than the thickness of the tricot, and the entire thickness of the tricot cannot be used for the height of the flow path.

In contrast, the flow path members 31 shown as an exemplary constitution in of the present invention in FIG. 1 and the like are arranged so that the flow path members 31 are not disposed one on another. Accordingly, the height (namely, the thickness) of the flow path member 31 fully contributes for the height of the groove of the flow path. As a consequence, the flow path will be higher in the use of the flow path members 31 of this embodiment compared to the use of the tricot flow path member having the same thickness as the height of flow path member 31, and the larger cross section contributes for the smaller resistance to flow.

In the embodiment shown in the drawings, a plurality of discontinuous flow path members 31 are fixedly secured on one separation membrane sheet 2. The term "discontinuous" means that a plurality of flow path members are provided with an interval between the adjacent members. More specifically, when the flow path members 31 in one separation membrane are peeled off the separation membrane sheet 2, a plurality of flow path members 31 which are separate one another are obtained. In contrast, the member such as a net, a tricot, or a film retains a continuous shape even if they are separated from the separation membrane sheet 2.

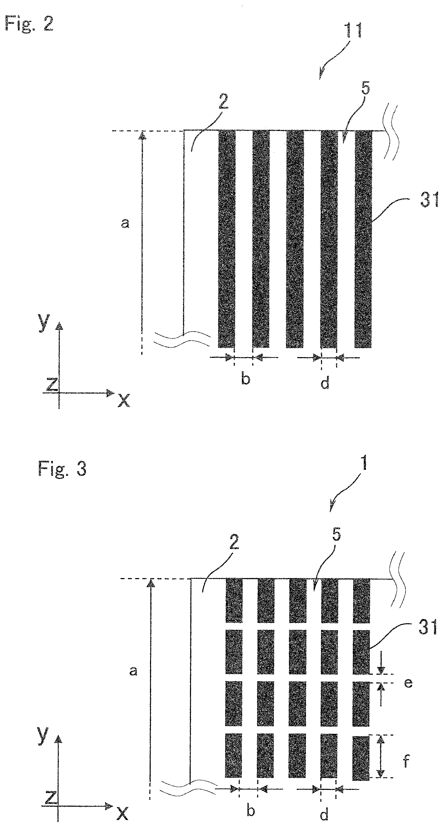

Provision of the plurality of discontinuous flow path members 31 suppresses pressure loss when the separation membrane 1 is incorporated in the separation membrane element. For example, the flow path members 31 of FIG. 2 are discontinuous only in the first direction (width direction of the separation membrane), while the flow path members 31 of FIG. 3 are discontinuous in both the first direction (width direction of the separation membrane) and the second direction (longitudinal direction of the separation membrane).

In FIG. 2 and FIG. 3, the flow path on the permeation side 5 is formed in the space between the adjacent flow path members 31.

In the separation membrane element, the separation membrane is preferably placed so that the second direction corresponds to the winding direction. More specifically, the separation membrane is placed in the separation membrane element such that the first direction (the width direction of the separation membrane) is parallel to the axial direction of the water collection tube 6, and the second direction (the longitudinal direction of the separation membrane) is perpendicular to the axial direction of the water collection tube 6.

The flow path members 31 are provided discontinuously in the first direction, and in the embodiment shown in FIG. 2 and FIG. 5, the flow path members 31 are provided continuously in the second direction from one end to the other end of the separation membrane sheet 2. More specifically, the flow path members 31 are provided so that they extend from the inner end to the outer end of the separation membrane 1 in the winding direction when the separation membrane is incorporated in the separation membrane element as shown in FIG. 5. The inner side of the winding direction is the side nearer to the water collection tube in the separation membrane and the outer side of the winding direction is the side farther to the water collection tube in the separation membrane.

FIG. 5 is a view schematically illustrating the separation membrane element 100 prepared by winding the separation membrane 1 around the water collection tube 6. In FIG. 5, the separation membrane 1 is described as one surface of the separation membrane leaf. The arrow indicated by CD in the drawing indicates the axial direction of the water collection tube 6 and the width direction of the separation membrane. The arrow indicated by MD indicates the longitudinal direction of the separation membrane and the winding direction of the separation membrane around the water collection tube 6.

The flow path member is described "continuous in the second direction" both when the flow path member is provided with no discontinuity as shown in FIG. 2, and when the flow path member is substantially continuous despite some discontinuity as shown in FIG. 3. In the case of the "substantially continuous" flow path member, interval e of the flow path member (namely, length of the discontinuous part in the flow path) in the second direction is preferably up to 5 mm. More specifically, the interval e is preferably up to 1 mm, and more preferably up to 0.5 mm. The total of the interval e included in a series of flow path members (from the top member to the last member) aligned in the second direction is preferably up to 100 mm, more preferably up to 30 mm, and still more preferably up to 3 mm. In the embodiment of FIG. 2, the interval e is 0 (zero).

When the flow path member 31 is provided without discontinuity as shown in FIG. 2, depression of the membrane during the filtration under pressure is suppressed. The depression of the membrane is the narrowing of the flow path by the collapsing of the membrane into the flow path.

In the case of FIG. 3, the flow path members 31 are discontinuous not only in the first direction but also in the second direction, and in other words, the flow path members 31 are provided with intervals in the longitudinal direction. However, as described above, depression of the membrane is suppressed since the flow path members 31 are substantially continuous in the second direction. Such provision of the flow path members 31 discontinuous in two directions means the reduced contact area between the flow path member and the fluid, and this results in the reduced pressure loss. In other words this embodiment can be described as the constitution having the flow paths 5 provided with branch points, and more specifically, in the constitution of FIG. 3, the fluid which has permeated through the membrane is divided by the flow path members 31 while flowing along the flow path 5, and then brought together in the downstream.

As described above, the flow path members 31 are provided in FIG. 2 so that they continue in the second direction from one end to the other end of the separation membrane sheet 2. In FIG. 3, the flow path members 31 are divided in the second direction into a plurality of parts while these parts are provided in train from one end to the other end of the separation membrane sheet 2.

The flow path member is described as being "provided from one end to the other end of the separation membrane sheet" both in the embodiment wherein the flow path member extends to the edge of the separation membrane sheet 2 and in the embodiment wherein an area without the flow path member is provided near the edge. In other words, the flow path member may be distributed in the second direction in the degree capable of forming the flow path on the permeation side, and in the separation membrane sheet, there may be some area where the flow path member is not provided. For example, the flow path member does not have to be provided in the area on the permeation side surface where the separation membrane sheet is adhered to the other separation membrane (which may be also referred to as the contact area) . An area with no flow path member may also be provided, for example, in the edge part or some other part of the separation membrane sheet for other reasons of specification or production.

The flow path members 31 may also be distributed substantially evenly throughout the separation membrane sheet in the first direction. However, as in the case of the distribution in the second direction, the flow path members do not have to be provided in the area of the surface on the permeation side contacting with other separation membrane. An area with no flow path member may also be provided, for example, in the edge part or some other part of the separation membrane sheet for other reasons of specification or production.

<<Size of the separation membrane sheet and the flow path member>>

In FIG. 2 to FIG. 4, a to f are as described below.

    a: length of the separation membrane sheet 2
    b: interval of the flow path member 31 in the width direction of the separation membrane sheet 2
    c: height of the flow path member (height difference between the flow path member 31 and the surface 22 of the separation membrane sheet on the permeation side)
    d: width of the flow path member 31
    e: interval of the flow path member 31 in the longitudinal direction of the separation membrane sheet 2
    f: length of the flow path member 31

The measurement of the values a to f may be conducted, for example, by using a commercially available shape measuring system or a microscope. These values are measured by measuring 30 or more locations in one separation membrane, and calculating the average by dividing the total sum of the values measured by the number of locations used for the measurement. The thus determined values obtained by measuring 30 or more locations may satisfy the ranges as described below.

(Length a of the separation membrane sheet)

Length a is the distance between one end of the separation membrane sheet 2 and the other end of the separation membrane sheet 2 in the second direction (longitudinal direction of the separation membrane) . When this distance is not constant, this distance may be measured in 30 or more locations in one separation membrane sheet 2 to calculate the average to thereby determine the length a.

(Interval b of the flow path member in the first direction)

In the first direction (the width direction of the separation membrane), interval b between the adjacent flow path members 31 corresponds to the width of the flow path 5. When the width of one flow path 5 is not constant in one cross section, namely, when the side surfaces of the two adjacent flow path members 31 are not parallel, average of the maximum width and the minimum width of one flow path 5 in one cross section is measured to calculate the average. When the flow path member 31 is trapezoid with the shorter upper base and longer lower base in the cross section perpendicular to the second direction as shown in FIG. 4, the distance between the upper parts of the adjacent two flow path members 31 and the distance between the lower parts of the adjacent two flow path members 31 are first measured to calculate the average. The interval between the flow path members 31 is measured for the cross section at 30 or more arbitrary locations to calculate the average for each cross section, and then, arithmetic average of the thus obtained average may be calculated to determine the interval b.

The pressure loss will be reduced with the increase in the interval b while a larger interval b is associated with higher risk of the depression of the membrane. On the contrary, smaller interval b is associated with lower risk of the depression of the membrane but with a higher risk of pressure loss. In view of the pressure loss, the interval b is at least 0.2 mm, and preferably at least 0.3 mm. In view of suppressing the depression of the membrane, the interval b is up to 5 mm, preferably up to 3 mm, still more preferably up to 2 mm, and most preferably up to 0.8 mm.

These upper and lower limits may be arbitrarily combined. For example, the interval b is at least 0.2 mm and up to 5 mm, and the pressure loss can be reduced with the depression of the membrane suppressed when the interval b is in such range. The interval b is preferably at least 0.2 mm and up to 2 mm, and most preferably at least 0.3 mm and up to 0.8 mm.

(Height c of the flow path member)

The height c is a difference in the height between the flow path member and the separation membrane sheet. As shown in FIG. 4, the height c is the difference in the height between the highest part of the flow path member 31 and the surface on the permeation side of the separation membrane sheet in the cross section perpendicular to the second direction. In other words, the thickness of the part impregnated in the substrate is not considered for the height, and the height c is the value obtained by measuring the height of the flow path member 31 for at least 30 locations and calculating the average. The height c of the flow path member may be determined either by observing the cross section of the flow path member in the same plane or by observing the cross section of the flow path member in two or more planes.

The height c may be adequately selected depending on the operational conditions and intended use of the element. The height c, however, may be selected as described below.

The flow resistance will be lower at the greater height c, and accordingly, the height c is at least 0.03 mm, and preferably at least 0.05 mm, and still more preferably at least 0.1 mm. In the meanwhile, higher number of membranes will be accommodated in one element at the smaller height c, and accordingly, the height c is up to 0.4 mm, and preferably up to 0.32 mm. The upper and lower limits as described above can be combined.

In addition, the difference in the height between two adjacent flow path members is preferably smaller since excessively large difference in the height results in the deformation of the separation membrane during the filtration under pressure which may lead to generation of defects in the separation membrane. The difference in the height of the two adjacent flow path members is preferably up to 0.1 mm (up to 100 $\mu$m), more preferably up to 0.06 mm, and still preferably up to 0.04 mm.

By the same reason, maximum difference in the height of all flow path members formed on the separation membrane is preferably up to 0.25 mm, and more preferably up to 0.1 mm, and still more preferably up to 0.03 mm.

(Width d of the flow path member)

Width d of the flow path member 31 is measured as described below. First, average of the maximum width and the minimum width of the one flow path member 31 is calculated in one cross section perpendicular to the first direction (the width direction of the separation membrane). More specifically, in the flow path member 31 having thinner upper part and thicker lower part as shown in FIG. 4, the width of the lower part and the width of the upper part of the flow path member are measured and the average is calculated. Such average is calculated for at least 30 cross sections, and arithmetic mean is calculated to thereby determine the width d per one membrane.

The width d of the flow path member 31 is at least 0.2 mm, and preferably at least 0.3 mm. When the width d is at least 0.2 mm, the shape of the flow path member 31 is retained even if the pressure is applied to the flow path member 31 during the operation of the separation membrane element, and stable formation of the flow path on the permeation side thereby enabled. The width d is up to 2 mm, and preferably up to 1.5 mm. When the width d is up to 2 mm, sufficient flow path can be formed on the permeation side.

When the flow path members have a width larger than the interval b between the flow path members in the second direction, the pressure applied to the flow path members will be dispersed.

The flow path members 31 are formed so that their length is longer than their width. Such long flow path member 31 is also referred to as a "wall-like member".

(Interval e of the flow path member in the second direction)

The interval e of the flow path member 31 in the second direction (the longitudinal direction of the separation membrane) is the shortest distance between the adjacent flow path members 31. As shown in FIG. 2, when the flow path members 31 are continuously provided in the second direction from one end to the other end of the separation membrane sheet 2 (from the inner end to the outer end in the winding direction of the separation membrane element), the interval e is 0 mm. When the flow path members 31 are discontinuous in the second direction as shown in FIG. 3, the interval e is preferably up to 5 mm, more preferably up to 1 mm, and still more preferably up to 0.5 mm. When the interval e is within such range, mechanical load applied to the membrane will be small even in the case of membrane depression and pressure loss by the clogging of the flow path will be suppressed. It should be noted that the lower limit of the interval e is 0 mm.

(Length f of the flow path member)

The length f of the flow path member 31 is the length of the flow path member 31 in the longitudinal direction (namely, the second direction) of the separation membrane sheet 2. The length f is determined by measuring 30 or more flow path members 31 in one separation membrane 1, and calculating the average. The length f of the flow path member should be shorter or equal to the length a of the separation membrane sheet. In the case length f of the flow path member equal to the length a of the separation membrane sheet means, the flow path member 31 continuously extends from the inner end to the outer end in the winding direction of separation membrane 1. The length f is preferably at least 10 mm, and more preferably at least 20 mm. Sufficient flow path is secured even under the pressure when the length f is at least 10 mm.

(Relation of the values a to f)

As described above, the flow path members of this embodiment can reduce the pressure loss compared to the conventional flow path member having the continuous shape as in the case of tricot. In other words, the technology of this embodiment allows use of a longer leaf length compared to the leaf of the conventional technology even at the same pressure loss. Use of the leaf with an increased leaf length enables use of a smaller number of leaves.

The number of leaves can be most effectively reduced when the values a to f satisfy the relations as described below.

i) $a^2f^2(b+c)^2\,(b+d) \times 10^{-6}/b^3c^3(e+f)^2 \leq 1400$, and

ii) $850 \leq a \leq 7000$, and

iii) $b \leq 2$, and

iv) $c \leq 0.5$, and

v) $0.15 \leq df\,/\,(b+d)\,(e+f) \leq 0.85$.

Provision of such flow path members of predetermined shape on the permeation side results in the pressure loss smaller than the flow path members having continuous shape like the conventional tricot, and use of a leaf with a longer leaf length is thereby enabled. Accordingly, a separation membrane element having good separation performance can be produced even if the number of leaves per separation membrane element is reduced.

In the relations as described above, unit of the length may be mm.

(Shape)

The flow path members are not particularly limited for its shape, and the preferable shape chosen is the one which reduces flow resistance of the flow path and which stabilizes the flow path during the permeation. In view of such situation, the shape of the flow path members may be rectangle, trapezoid, curved figure, or a combination thereof in any cross section perpendicular to the plane of the separation membrane.

When the cross section of the flow path members is a trapezoid and the difference in the length between the upper base and the lower base is too large, the membrane in contact with the shorter base is more likely to be depressed into the groove during the filtration under pressure. For example, when the upper base is shorter than the lower base of the flow path members, the width of the upper part of the flow path defined between such flow path members is wider than the width at the lower part of the flow path, and the membrane above is more likely to be depressed downward. In order to prevent such depression, the ratio of the length of the upper base to the length of the lower base of the flow path members is preferably at least 0.6 and up to 1.4, and more preferably at least 0.8 and up to 1.2.

In view of reducing the flow resistance, the shape of the flow path members is preferably a straight cylinder perpendicular to the plane of the separation membrane as described below. The flow path members may be formed so that the members may have a smaller width at the higher part, a larger width at the higher part, or the same width irrespective of the height.

However, the upper side of the cross section of the flow path members may be curved as long as the collapsing of the flow path members during the filtration under pressure is within certain level.

The flow path members may be formed from a thermoplastic resin. When the flow path members comprise a thermoplastic resin, shape of the flow path members can be freely adjusted so that the desired separation properties and permeation performance required is satisfied by changing the temperature used for the processing and the type of the thermoplastic resin selected.

The overall shape of the flow path members in the plane direction of the separation membrane may be straight line as shown in FIG. 2 and FIG. 3, and other exemplary shapes include curved, serrated, and wavy line. The flow path members of these shapes may be in the form of broken line or dots. While the shape in dotted or broken line is preferable in view of reducing the flow resistance, such discontinuity of the flow path member may result in the frequent depression of the membrane in the filtration under pressure. Accordingly, the shape may be adequately selected depending on the intended use.

When the shape in plane direction of the separation membrane of the flow path members is straight line, adjacent flow path members may be arranged in substantially parallel relationship with each other. The "substantially parallel" arrangements include, for example, the arrangement wherein the flow path members do not cross with each other on the separation membrane, and the arrangement wherein the angle formed between the longitudinal direction of two adjacent flow path members is preferably at least 0° and up to 30°, more preferably at least 0° and up to 15°, and still more preferably at least 0° and up to 5°.

The angle formed between the longitudinal direction of the flow path members and the axial direction of the water collection tube is preferably at least 60° and up to 120°, more preferably at least 75° and up to 105°, and still more preferably at least 85° and up to 95°. When the angle formed between the longitudinal direction of the flow path members and the axial direction of the water collection tube is within such range, the water which has permeated through the membrane will be efficiently collected into the water collection tube.

For the stable formation of the flow path in the separation membrane element, depression of the separation membrane sheet during the application of pressure to the separation membrane sheet is preferably avoided. Accordingly, sufficient contact area between the separation membrane sheet and the flow path members, namely, sufficient ratio of the area of the flow path members to the area of the separation membrane sheet (namely, sufficient ratio of projected area to the membrane surface of the separation membrane sheet) is desirable. In the meanwhile, the flow path preferably has a large cross section for the reduction of the pressure loss. The cross section of the flow path which is perpendicular to the longitudinal direction of the flow path is preferably in the form of a concave lens in view of securing large contact area between the separation membrane sheet and the flow path members and wide cross sectional area of the flow path. The flow path members 31 may also be a straight cylinder wherein the width of the cross section in perpendicular direction to the winding direction is constant. The flow path members 31 may also be trapezoid wall-like member, elliptic cylinder, ellipsoidal cone, quadrangular pyramid, or semi-sphere wherein width of the cross section in perpendicular direction to the winding direction is not constant as long as the separation membrane performance is not affected.

The shape of the flow path members is not limited to the shape shown in FIG. 1 to FIG. 3. When the flow path members are provided by fixedly securing the molten material on the surface of the separation membrane sheet on the side of the permeation side, for example, by hot melting, the shape of the flow path members can be freely adjusted so that the desired separation properties and permeation performance are realized by changing the temperature used for the processing and the type of the hot melt resin selected.

In FIG. 1 to FIG. 3, plane shape of the flow path members 31 is a straight line in the longitudinal direction. However, flow path members 31 are protrusions in relation to the surface of the separation membrane sheet 2, and the flow path members of other shapes are also acceptable as long as the intended effects as the separation membrane element are not impaired. More specifically, the shape of the flow path members in the plane direction may also be a curved or wavy line. Alternatively, two or more flow path members may be formed on one separation membrane so that they have at least one of the width and length different from each other.

(Projected area ratio)

The projected area ratio of the flow path members to the surface of the separation membrane on the permeation side is preferably at least 0.03 and up to 0.85, more preferably at least 0.15 and up to 0.85, still more preferably at least 0.2 and up to 0.75, and most preferably at least 0.3 and up to 0.6 particularly in view of reducing the flow resistance of the flow path on the permeation side to thereby stabilize the flow path. It is to be noted that the projected area ratio is the value determined by cutting 5 cm x 5 cm of the separation membrane, determining the projected area of the flow path members when projected to the plane parallel to the surface direction of the separation membrane, and dividing this projected area by the cut area ($25$ cm$^2$). This value may also be represented by the df/(b+d) (e+f) in the above equation v) .

(Percentage of the area with no flow path member)

The water that has passed through the separation membrane is collected to the water collection tube 6 after passing through the flow path on the permeation side 5. In the separation membrane, while flowing toward the water collection tube 6, the water which has permeated through the membrane at the area far from the water collection tube, namely, the area near the outer end in the winding direction (the area near the right end in FIG. 5) is brought together with the water which has permeated through the membrane at the inner areas, and the water then flows toward the water collection tube 6. As described above, amount of the water flowing through the flow path on the permeation side is smaller at a position far from the water collection tube 6.

Accordingly, the effect on the amount of water produced by the entire element is small even if the flow path members of the permeation side were absent in the area near the outer end in the winding direction and the flow resistance in such area were high. By the same reason, the effect on the amount of water produced by the element is small even if the precision of the flow path members formation were impaired, and the resin forming the flow path members was continuously coated in the first direction (width direction of the separation membrane) in the area near the outer end in the winding direction. The situation would be the same if the resin is coated without any gap in the plane direction (x-y plane) of the separation membrane sheet.

Accordingly, proportion of the distance from the outer end in the winding direction of the separation membrane sheet 2 to the outer end in the winding direction of the flow path members 31 on the permeation side, namely, the length L3 in the second direction (the longitudinal direction of the separation membrane) of the area R3 of the area provided at the outer end in the winding direction of the separation membrane sheet 2 where the flow path members of the permeation side are not provided in relation to the length L1 in the second direction of the entire separation membrane (corresponding to the "a" as described above) is preferably at least 0% and up to 30%, more preferably at least 0% and up to 10%, and most preferably at least 0% and up to 3%. This proportion is referred to as the percentage of the area with no flow path member.

In FIG. 6, the percentage of the area with no flow path member is represented by (L3/L1) x 100.

It is to be noted that the embodiment shown in FIG. 6 is the one having no flow path member on the permeation side in the area R3. The area 3, however, may be an area wherein continuous flow path members in the width direction are provided on the permeation side.

FIG. 6 is a cross section of the separation membrane sheet 2 and the flow path member 31 of the permeation side at the outer end in the winding direction taken along the longitudinal direction. In FIG. 6, the flow path member 31 on the permeation side is fixedly secured to the separation membrane sheet 2, and the flow path member extends to not to the end but to the vicinity of the outer end in the winding direction of the separation membrane sheet 2. It is to be noted that, while the embodiment shown in FIG. 6 is the one having the flow path member 31 of the permeation side continuously provided in the longitudinal direction, the flow path member 31 may have various forms as described above.

In the drawing, the area provided with the flow path member on the permeation side is indicated by R2, and the area not provided with the flow path member 31 on the permeation side is indicated by R3. In addition, the length in the MD direction of the separation membrane sheet 2 is indicated by L1, the length in the MD direction of the flow path member 31 on the permeation side (namely, the length of the area R2) is indicated by L2, and the length in the MD direction of the area R3 where the flow path member 31 on the permeation side is not present is indicated by L3. The MD direction is the longitudinal direction of the separation membrane and the winding direction of the separation membrane.

[2. Separation membrane element]

(2-1) Summary

As shown in FIG. 5, the separation membrane element 100 comprises the water collection tube 6 and separation membrane 1 having any one of the constitution as described above, and the separation membrane 1 is wound around the water collection tube 6.

(2-2) Separation membrane

<Summary>

The separation membrane 1 is wound around the water collection tube 6 so that the width direction of the separation membrane is parallel to the axial direction of the water collection tube 6. This in turn means that the longitudinal direction of the separation membrane 1 corresponds to the winding direction.

Accordingly, the wall-like flow path members 31 are discontinuously arranged at least in the axial direction of the water collection tube 6 on the surface 22 of the separation membrane 1 on the permeation side. More specifically, the flow path 5 is formed so that the flow path continues from the outer end to the inner end of the separation membrane in the winding direction. As a consequence, the permeated water readily reaches the central pipe and the flow resistance is reduced, and the amount of water produced is thereby increased.

The "inner in the winding direction" and the "outer in the winding direction" are as shown in FIG. 5. More specifically, "inner end of the winding direction" and the "outer end of the winding direction" are respectively the end nearest to the water collection tube 6 and the end farthest to the water collection tube 6 in the separation membrane 1.

As described above, the flow path members do not have to reach the edge of the separation membrane, and, for example, the flow path members do not have to be provided at in the outer end portion of the envelope membrane in the winding direction and at the end portion of the envelope membrane in the axial direction of the water collection tube.

<Membrane leaf and envelope membrane>

As shown in FIG. 1, the separation membrane forms a membrane leaf 4 (which may be simply referred to as "leaf"). In the leaf 4, the separation membrane 1 is placed so that the surface 21 of the supply side opposes the surface 71 of the supply side of another separation membrane 7 with the flow path members (not shown) sandwiched therebetween. In the separation membrane leaf 4, the flow path on the supply side is formed between the supply side of the separation membranes.

Furthermore, when two membrane leaves 4 are laminated, an envelope membrane is formed by the separation membrane 1 and the separation membrane 7 of another membrane leaf opposing the surface 22 on the permeation side of the separation membrane 1. In the envelope membrane, the space between the opposing permeation surfaces is open only at one side in the inner end in the winding direction in the rectangle separation membrane so that the water that has permeated through the membrane also flows into the water collection tube 6, and the membrane is sealed along other three sides. The water that has permeated through the membrane is isolated from the raw water by this envelope membrane.

Exemplary methods used for the sealing include adhesion by using an adhesive or hot melting, fusion by heating or by the use of a laser, and sandwiching of a rubber sheet. The most preferred is the sealing by adhesion because of the simplicity and the high effect.

In the surface of the separation membrane on the supply side, the inside end in the winding direction is closed by the folding or sealing. When the surface of the separation membrane on the supply side is sealed and not folded, deformation at the end is less likely to occur. When the deformation near the folding is suppressed, gaps are less likely to be formed between the separation membranes during the winding, and leakage from the gap is less likely to occur.

When the leakage is suppressed as described above, yield of the envelope membrane will be improved. The yield of the envelope membrane is determined by conducing air leak test of the separation membrane element in water. In the test, the number of leaked envelope membranes is counted, and the rate (number of leaked envelope membranes / number of evaluated envelope membrane) is calculated on the base of the result of the counting to thereby determine the yield.

More specifically, the air leak test is conducted by the following procedure, namely, by sealing one end of the central pipe in the separation membrane element, injecting air from the other end, and confirming the bubbles generated as a result of the air leakage since the injected air that has passed through the holes of the water collection tube to the permeation side of the separation membrane moves through the gap and reaches the supply side when the gap is present due to the deformation of the separation membrane near the fold by the insufficient folding or the like as described above. The air that has reached the supply side then reaches the water from the end of the separation membrane element (supply side) , and the air leakage can be confirmed as the bubble generation.

When the separation membrane leaves are formed by the folding, the time required for the folding of the separation membrane would be longer when the leaves are longer (namely, when the separation membrane used is longer) . However, increase in the production time can be reduced by employing the sealing of the supply side of the separation membrane instead of the folding.

It is to be noted that, the opposing separation membranes (the separation membranes 1 and 7 in FIG. 1) in the separation membrane leaf and the envelope membrane may either have the same constitution or different constitutions. More specifically, the flow path members of the permeation side as described above need to be provided on at least one surface of the opposing two permeation side surfaces, and this in turn means that a separation membrane having the flow path members on the permeation side and a separation membrane having no flow path member may be alternately laminated. However, for the convenience of description, the "separation membrane" encompasses the separation membrane having no flow path member on the permeation side (for example, a membrane having the same constitution as the separation membrane sheet) in the description of the separation membrane elements and in the description relating to the separation membrane elements.

The separation membranes which oppose with each other on the surface of the permeation side or the supply side may be either two different separation membranes or one separation membrane which has been folded.

(2-3) Flow path on the permeation side

As described above, the separation membrane 1 has the flow path members on the permeation side 31, and the flow path on the permeation side is defined in the envelope membrane between the flow path members 31 on the permeation side, namely, between the surfaces on the permeation side of the opposing separation membranes.

(2-4) Flow path on the supply side

(Flow path member)

The separation membrane element 100 has the flow path members (not shown) between the supply side surface of the opposing separation membranes, and the flow path members have the projected area ratio in relation to the separation membrane 1 which is in excess of 0 and less than 1. The flow path members on the supply side preferably have the projected area ratio of at least 0.03 and up to 0.50, more preferably at least 0.10 and up to 0.40, and most preferably at least 0.15 and up to 0.35. When the projected area ratio is at least 0.03 and up to 0.50, flow resistance can be reduced to a relatively low level. It is to be noted that the projected area ratio is the value determined by cutting 5 cm x 5 cm of the separation membrane and the flow path members on the supply side, and determining the projected area of the flow path members when projected to the plane parallel to the surface direction of the separation membrane, and dividing this projected area by the cut area.

As will be described below, the height of the flow path members on the supply side is preferably in excess of 0.5 mm and up to 2.0 mm, and more preferably at least 0.6 mm and up to 1.0 mm in consideration of the balance of various aspects of the performance and operation cost.

The flow path members on the supply side are not particularly limited for it shape, and it may have either a continuous shape or a discontinuous shape. Exemplary flow path members having a continuous shape include members such as a film or a net. The "continuous shape" means that the member is continuous substantially over the entire area of the flow path member. The continuous shape of the flow path member continuous shape may partly include discontinuous area to the degree not causing the decrease in the amount of water produced. Definition of the "discontinuous" is as described above for the flow path member on the permeation side. The material used for the flow path members on the supply side is not particularly limited, and it may be the same as or different from the material used for the separation membrane.

(Provision of surface irregularities)

Instead of providing the flow path members on the supply side, the surface of the separation membrane on the supply side may be provided with the height difference by means of, for example, embossing, hydro pressing, or calendaring.

Exemplary methods used for the embossing include roll embossing, and the pressure, temperature, and the like used in the embossing may be adequately determined depending on the melting point of the separation membrane. For example, when the separation membrane has a porous support layer containing epoxy resin, the linear pressure is preferably at least 10 kg/cm and up to 60 kg/cm, and the heating temperature is at least 40°C and up to 150°C. When the separation membrane has a porous support layer containing a heat resistant resin such as polysulfone, the linear pressure is preferably at least 10 kg/cm and up to 70 kg/cm, and the roll heating temperature is preferably at least 70°C and up to 160°C. In the case of roll embossing, the wind up speed is preferably at least 1 m/minute and up to 20 m/minute in both of these cases.

The pattern of the roll in the case of embossing is not particularly limited. The pattern, however, should be selected in view of the importance of reducing the flow resistance of the flow path and stabilizing the flow path during the supply and the permeation of the fluid to and through the separation membrane element. Accordingly, the shape seen from above the surface may be ellipse, circle, oblong, trapezoid, triangle, rectangle, square, parallelogram, rhombus, or irregular shape, and in three dimensions, the protruded part of the surface irregularities may have a cross section the same, dilating, or narrowing from the top surface.

The difference in the height on the supply side of the separation membrane provided by the embossing may be freely adjusted by changing the pressure and temperature applied during the embossing so that the separation properties and the water permeation performance may satisfy the required level. However, the number of the membrane leaves which can be accommodated in the vessel will be reduced when the height difference on the supply side of the separation membrane is too large despite the reduced flow resistance. In the meanwhile, small height difference results in the higher flow resistance, and hence, in the poor separation properties and water permeation performance. Accordingly, water production ability of the element would be reduced, and a higher operation cost would be required for increasing the amount of the water production.

Accordingly, the height difference of the surface on the supply side of the separation membrane is preferably in excess of 0.5 mm and up to 2.0 mm, and more preferably at least 0.6 mm and up to 1.0 mm in consideration of the balance of various aspects of the performance and operation cost.

The height difference of the surface on the supply side of the separation membrane can be determined by the same procedure as the height difference on the permeation side of the separation membrane.

Width of the groove is preferably at least 0.2 mm and up to 10 mm, and more preferably at least 0.5 mm and up to 3 mm.

Pitch may be designed preferably in the range of at least one tenth of the groove width and up to 50 times the groove width. The groove width is the width of the part with the lower height (recess part) on the surface where the height difference is present, and the pitch is the horizontal distance between the highest point in the high area of the surface where the height difference is present to the highest point in the adjacent high area.

The projected area ratio of the part which will be the protrusion (the part with higher height) by the embossing is preferably at least 0.03 and up to 0.5, more preferably at least 0.10 and up to 0.40, and most preferably at least 0.15 and up to 0.35 by the same reason as the flow path members on the supply side.

The "height difference" on the surface of the separation membrane is the difference in height between the surface of the separation membrane sheet and the top of the flow path members (namely, the height of the flow path member), and when the separation membrane sheet is provided with the surface irregularity, difference in height between the recessed part and the protruded part.

(2-5) Water collection tube

The water collection tube 6 is not particularly limited for its material, shape, size, and the like as long as the water permeated through the membrane can flow therethrough. The water collection tube 6 may comprise, for example, a cylindrical member having a side wall having a plurality of holes.

(2-6) First embodiment

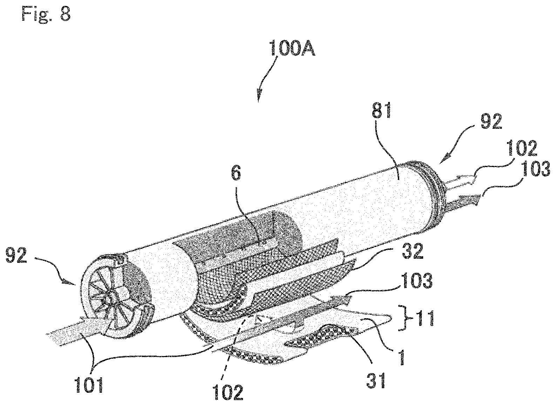

The separation membrane elements 100A, 100B, and 100C according to the first to the third embodiment are shown in FIG. 8 to FIG. 10.

FIG. 8 is a partially exploded view of the separation membrane element 100A according to the first embodiment, and a plurality of separation membranes 1 are wound around the water collection tube 6. In addition to the constitution as described above, the separation membrane element 100A is also constituted so that the edge plates 92 having the holes are provided at opposite ends (the first end and the second end) of the separation membrane element 100A. In addition, in the separation membrane element 100A, a cover 81 is wound around the outer peripheral surface of the wound separation membranes (hereinafter referred to as "wound membranes").

While the edge plate 91 as described below has no holes for the passage of the raw water, the edge plate 92 has a plurality of holes, allowing the raw water to pass therethrough.

The separation membrane 1 is in the form of an envelope membrane 11, and as described above, the flow path members 31 of the permeation side are provided in the envelope separation membrane 11. The flow path members 32 of the supply side are provided between the envelope membranes 11.

It is to be noted that the flow path members on the permeation side 31 are shown in FIG. 8 to FIG. 10 in dot shape for the drawing convenience. However, as described above, the configuration of the flow path member, however, is not particularly limited.

Next, water treatment using the separation membrane element 100A is described. The raw water 101 supplied from the first end of the separation membrane element 100A flows into the flow path on the supply side through the holes in the edge plate 92. The raw water 101 is thereby brought in contact with the surface of the separation membrane 1 on the supply side, and the raw water 101 is separated by the separation membrane 1 into water 102 which has permeated through the membrane and the water 103 which has been concentrated. The permeated water 102 then passes through the flow path on the permeation side and flows into the water collection tube 6. The permeated water 102 which has passed through the water collection tube 6 then flows out of the separation membrane element 100A from the second end. The concentrated water 103 passes through the flow path on the supply side, and flows out of the separation membrane element 100A from the holes of the edge plate 92 at the second end.

(2-7) Second embodiment

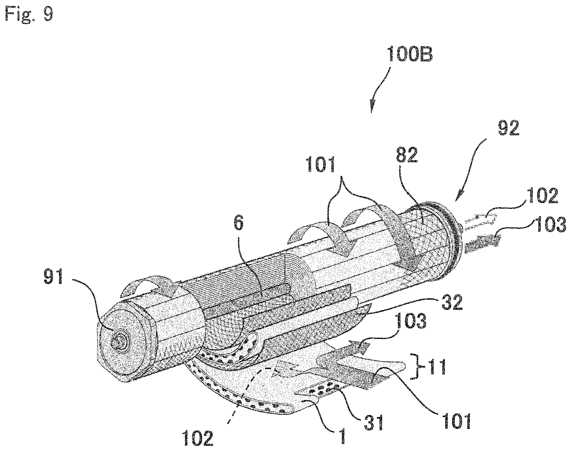

The separation membrane element 100B of this embodiment is described by referring to FIG. 9. Description of the constituents which have been described in the foregoing is omitted by using the same numerals.

The separation membrane element 100B has the edge plate 91 having no holes provided at the first end and a second edge plate 92 having holes provided at the second end. The separation membrane element 100B also has a porous member 82 which is wound around the outermost surface of the wound separation membrane 1.

The member used for the porous member 82 is the one having a plurality of holes for allowing the raw water to pass therethrough. The holes provided in the porous member 82 may also be referred to as the inlet for supplying the raw water. The porous member 82 is not particularly limited for the type of the material, size, thickness, rigidity, and the like as long as it has a plurality of holes . The membrane area per unit area of the separation membrane element can be increased by employing the member having a relatively low thickness for the porous member 82.

The thickness of the porous member 82 is, for example, up to 1 mm, up to 0.5 mm, or up to 0.2 mm. The porous member 82 may also be a member that has the softness or flexibility sufficient for fitting with the curved peripheral surface of the wound membranes. More specifically, the porous member 82 used may be a net, a porous film, or the like. The net or the porous film may be in the form of an envelope so that the wound membranes can be accommodated therein or in the form of a sheet so that it can be wound around the wound membranes.

The porous member 82 is provided on the outer peripheral surface of the separation membrane element 100B, and such provision of the porous member 82 means provision of the holes on the outer peripheral surface of the separation membrane element 100B. In other words, the "outer periphery" is, in particular, the outer peripheral surface of the separation membrane element 100B excluding the surface on the first end and the surface on the second end. In this embodiment, the porous member 82 is provided to cover substantially entire outer peripheral surface of the wound membranes.

In this embodiment, the raw water is supplied from the outer peripheral surface of the separation membrane element 100B (outer peripheral surface of the wound membranes), and therefore, axial deformation of the wound separation membrane 1 which is caused since the wound separation membrane and the like is extruded in a longitudinal direction (the so called telescoping) can be suppressed even after repeated operation of the separation membrane element 100B or in the operation of the separation membrane element 100B under high pressure conditions. In this embodiment, the raw water is also supplied from the gap between the pressure vessel (not shown) and the separation membrane element, and abnormal stagnation of the raw water is thereby suppressed.

In the separation membrane element 100B, the raw water does not flow into the separation membrane element 100B from the first end since the edge plate at the first end is the edge plate 91 having no holes. The raw water 101 is supplied to the separation membrane 1 from the outer peripheral surface of the separation membrane element 100B through the porous member 82. The thus supplied raw water 101 is separated by the separation membrane into the permeated water 102 and the concentrated water 103, and the permeated water 102 passes through the water collection tube 6 to be collected from the second end of the separation membrane element 100B. The concentrated water 103 passes through the holes in the perforated edge plate 92 at the second end to be discharged from the separation membrane element 100B.

(2-8) Third embodiment

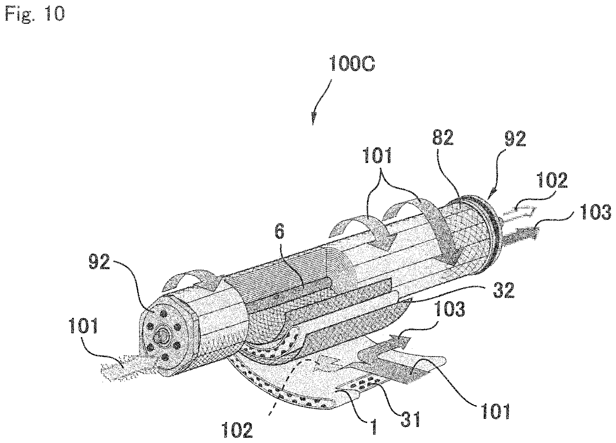

The separation membrane element 100C of this embodiment is described by referring to FIG. 10. Description of the constituents which have been described in the foregoing is omitted by using the same numerals.

The separation membrane element 100C is the same as the element of the second element except that it has the edge plate 92 having holes provided at each of the first and second ends. The separation membrane element 100C also has the porous member 82 as in the case of the separation membrane element 100B.

Because of such constitution, the raw water 101 in this embodiment is supplied to the wound membranes from the outer peripheral surface of the membrane element 100C through the holes of the porous member 82, and also, to the wound membranes from the first end of the membrane element 100C through the holes of the edge plate 92 having the holes at the first end. The permeated water 102 and the concentrated water 103 are discharged to the exterior of the separation membrane element 100C from the second end as in the case of the separation membrane element 100A of the first embodiment.

The raw water is supplied to the wound membranes not only from one end of the separation membrane element 100C (the edge plate 92 having the holes) but also from the outer peripheral surface of the separation membrane element 100C, and deformation of the separation membrane can be thereby suppressed. The raw water is supplied, also in this embodiment, from the gap between the pressure vessel and the separation membrane element, and abnormal stagnation of the raw water is thereby suppressed.

[3. Production method of the separation membrane element]

The production method of the separation membrane element includes the step of producing the separation membrane, and the step of producing the separation membrane at least includes the steps of:

preparing a separation membrane sheet containing the substrate and the separation functional layer;
softening a material having a composition different from the separation membrane sheet by heat;
discontinuously placing the softened material on the surface of the separation membrane sheet on the side of the substrate at least in the first direction (in the width direction of the separation membrane sheet) to form the flow path members on the permeation side; and
solidifying the material to fixedly secure the flow path members of the permeation side on the separation membrane sheet.

Next, the steps in the production method of the separation membrane element are described.

(3-1) Production of the separation membrane sheet

Production method of the separation membrane sheet has already been described. However, in short, the production method is as described below.

The resin is dissolved in a good solvent, and the resulting resin solution is cast on the substrate and immersed in pure water to combine the porous support layer with the substrate. The separation functional layer is then formed on the porous support layer as described above, and if necessary, the layer is chemically treated by chlorine, acid, alkali, or nitrous acid to improve the separation and permeation performance. The monomer and the like are then washed to prepare the continuous sheet of the separation membrane sheet.

If desired, the separation membrane sheet may be provided with surface irregularities, for example, by embossing before or after the chemical treatment.

(3-2) Arrangement of the flow path members on the permeation side

The production method of the separation membrane includes the step of providing discontinuous flow path members on the permeation side surface of the separation membrane sheet. This step may be conducted at any timing in the production of the separation membrane. For example, the flow path members may be provided before forming the porous support layer on the substrate; after forming the porous support layer and before forming the separation functional layer; or after forming the separation functional layer and before or after conducting the chemical treatment as described above.

The method of providing the flow path members comprises, for example, the steps of providing a soft material on the separation membrane, and hardening the soft material. More specifically, provision of the flow path members may be accomplished by using a UV curable resin, chemical polymerization, hot melting, or drying. Use of the hot melting is particularly preferable, and the hot melting comprises the steps of softening (namely, heat melting) the material such as a resin, providing the softened material on the separation membrane, and hardening the material by cooling to thereby fixedly secure the material onto the separation membrane.

Exemplary methods used for providing the flow path members include coating, printing, and spraying, and the exemplary devices used include nozzle type hot melt applicator, spray type hot melt applicator, flat nozzle type hot melt applicator, roll coater, extrusion coater, printer, and spray.

(3-3) Formation of the flow path on the supply side

When the flow path members on the supply side are a discontinuous member formed from a material different from the separation membrane sheet, the flow path members on the supply side may be conducted by the same method and timing as the formation of the flow path members on the permeation side.

The surface of the separation membrane on the supply side may also be provided with the height difference by means of, for example, embossing, hydro pressing, and calendering.

Exemplary methods used for the embossing include roll embossing, and the pressure, temperature, and the like used in the embossing may be adequately determined depending on the melting point of the separation membrane. For example, when the separation membrane has a porous support layer containing epoxy resin, the linear pressure is preferably at least 10 kg/cm and up to 60 kg/cm, and the heating temperature is at least 40°C and up to 150°C. When the separation membrane has a porous support layer containing a heat resistant resin such as polysulfone, the linear pressure is preferably at least 10 kg/cm and up to 70 kg/cm, and the roll heating temperature is preferably at least 70°C and up to 160°C. In the case of roll embossing, the wind up speed is preferably at least 1 m/minute and up to 20 m/minute in both of these cases.

The pattern of the roll in the case of embossing is not particularly limited. The pattern, however, should be selected in view of the importance of reducing the pressure loss of the flow path and stabilizing the flow path during the supply and the permeation of the fluid to and through the separation membrane element. Accordingly, the shape seen from above the surface may be ellipse, circle, oblong, trapezoid, triangle, rectangle, square, parallelogram, rhombus, or irregular shape, and in three dimensions, the protrusion may have a smaller width at the higher part, a larger width at the lower part, or the same width irrespective of the height.

The difference in the height on the supply side of the separation membrane provided by the embossing may be freely adjusted by changing the pressure and temperature applied during the embossing so that the separation properties and the water permeation performance satisfy the required level.

As described above, when the flow path on the supply side is formed by fixedly securing the flow path members of the supply side onto the separation membrane sheet, or by forming the surface irregularities, such step of forming the flow path on the supply side may be regarded a step in the production method of the separation membrane.

When the flow path on the supply side is a continuously formed member such as a net, the flow path members of the permeation side may be placed on the separation membrane sheet to prepare the separation membrane, and the separation membrane and the flow path members on the supply side may be laid one on another.

(3-4) Formation of the separation membrane leaf

The separation membrane leaf may be formed by folding the separation membrane so that the surface on the supply side will be in the inside as described above, or by adhering two separate separation membranes so that the surface on the supply side will oppose with each other.

The method used for producing the separation membrane element preferably includes the step of sealing the separation membrane at its inner end in the winding direction. More specifically, the two separation membranes are laid one on another in the sealing step so that the surface on the supply side of the separation membrane faces each other, and then, the inner end in the winding direction of the overlaid separation membranes, namely, the left end in FIG. 5 is sealed.

Exemplary methods used for the "sealing" include adhesion by using an adhesive or hot melting, fusion by heating or by the use of a laser, and sandwiching of a rubber sheet. The most preferred is the sealing by adhesion because of the simplicity and the high effect.

In this step, a flow path member of the supply side separately formed from the separation membrane may be provided in the inside of the overlaid separation membranes. Alternatively, such provision of the flow path member of the supply side may be omitted by preliminarily providing the height difference on the supply side surface of the separation membrane by the embossing or the resin coating as described above.

Either one of the sealing of the supply side surface and the sealing of the permeation side surface (formation of the envelope membrane) may be conducted before the other, and the sealing of the supply side surface and the sealing of the permeation side surface may be simultaneously conducted with the separation membranes overlaid one on another. However, in view of suppressing the wrinkling of the separation membrane in the winding, solidification of the adhesive or the hot melting, namely, the solidification for the formation of the envelop membrane is preferably conducted after the completion of the winding to thereby tolerate slipping in longitudinal direction of the adjacent separation membranes in the winding.

(3-5) Formation of the envelope membrane

The envelope membrane may be formed by folding and adhering one separation membrane so that the surface on the permeation side is in the inside, or by adhering two separation membranes so that the surface on the permeation side is in the inside. In the case of rectangular envelope membrane, three sides are sealed so that one side in the longitudinal direction is left open. The sealing may be accomplished by the adhesion using an adhesive or hot melting, or fusion using heat or laser.

The adhesive used in the formation of the envelope membrane may preferably have a viscosity in the range of at least 40 P and up to 150 P, and more preferably at least 50 P and up to 120 P. When the viscosity of the adhesive is too high, the laminated leaf is more likely to be wrinkled during the winding around the water collection tube, and the wrinkles may lead to the loss of the performance of the separation membrane element. On the contrary, when the viscosity of the adhesive is too low, the adhesive may leak from the edge of the leaf to stain the apparatus. Attaching of the adhesive to the area other than the intended area results in the loss of the performance of the separation membrane element and the working efficiency is greatly despaired by since treatment of the leaked adhesive is required.

Coating weight of the adhesive is preferably such that the width of the part where the adhesive is coated is at least 10 mm and up to 100 mm after winding around the water collection tube. This enables reliable adhesion of the separation membrane, and flowing to the raw water to the permeation side is thereby suppressed. A relatively large effective membrane area of the separation membrane element is also realized by such coating weight.

The adhesive used is preferably a urethane adhesive, and in order to adjust the viscosity to the range of at least 40 P and up to 150 P, the isocyanate/polyol weight ratio, namely, the weight ratio of the isocyanate (main component) to the polyol (curing agent) is at least 1/5 and up to 1. Viscosity of the adhesive was preliminarily measured by Type B viscometer (JIS K 6833) for the main component alone, the curing agent alone, and the mixture of the weight ratio as described above.

(3-6) Winding of the separation membrane

The production of the separation membrane element can be accomplished by the apparatus used for conventional elements. The method used in the production of the element may be the method described in the references (Japanese Patent Publication No. 44-14216, Japanese Patent Publication No. 4-11928, and Japanese Patent Application Laid-Open No. 11-226366) which is as described below in detail.

When the separation membrane is wound around the water collection tube, the separation membrane is placed so that the closed end of the leaf, namely, the closed end of the envelope membrane faces the water collection tube. When the separation membrane is wound around the water collection tube in such arrangement, the separation membrane will be spirally wound around the separation membrane.

When a spacer such as a tricot or a substrate is preliminarily wound around the water collection tube, flowing of the adhesive coated on the water collection tube can be avoided, and hence, leakage will be suppressed, and still more, stability of the flow path near the water collection tube will be realized. The spacer may be wound around the water collection tube for the length longer than the circumference of the water collection tube.

(3-7) Other steps

The production method of the separation membrane element may optionally contain the step of further winding a film or a filament on the outer periphery of the thus formed wound separation membrane, the step of cutting off the edges of the separation membrane at opposite ends in the axial direction of the water collection tube, the step of attaching the edge plates, and the like.

[4. Use of the separation membrane element]

The separation membrane element may also be used as a separation membrane module by accommodating the serially or parallelly connected separation membrane elements in the pressure vessel.

The separation membrane module and the separation membrane element as described above may be combined with a pump for supplying a fluid, an apparatus for conducting the pretreatment, and the like to constitute a fluid separation apparatus, and by using such fluid separation apparatus, an intended type of water can be produced, for example, by separating a raw water into the water such as drinking water that has permeated through the membrane and the concentrated water that failed to permeate through the membrane.

The degree of desalination increases with the increase in the operation pressure of the fluid separation while the increase in the operation pressure is also associated with the increase in the energy required for the operation. In additional view of the retention of the flow path on both supply side and permeation side of the separation membrane element, the operation pressure during the permeation of the raw water through the membrane module is preferably at least 0.2 MPa and up to 5 MPa. Increase in the temperature of the raw water is associated with the decrease in the degree of desalination, while decrease in the raw water temperature is associated with the decrease in the membrane permeation flux, and the temperature is preferably at least 5°C and up to 45°C. In addition, when the raw water has a pH in neutral range, generation of the scale, for example, the scale of magnesium is suppressed even in the case of the raw water such as sea water having a high salt concentration. Deterioration of the membrane is also suppressed.

The fluid treated by the separation membrane element is not particularly limited, and when used for the water treatment, the raw water may be a liquid mixture containing at least 500 mg/L and up to 100 g/L of TDS (total dissolved solids) such as sea water, brine, and exhaust water. While TDS generally means the total dissolved solids determined by dividing the weight by the volume, it is often represented by "weight ratio" by regarding 1 L as 1 kg. While TDS is the value determined by definition by passing the solution through a filter of 0.45 $\mu$m, evaporating the filtrate at a temperature of 39.5 to 40.5°C, and weighing the residue, it would be more convenient to calculate the TDS from practical salinity (S) .

[Examples]

Next, the present invention is described in further detail by referring to the following Examples which by no means limit the scope of the present invention.

(Height difference on the permeation side of the separation membrane)

Average height difference was analyzed from the results of the height measurement for 5 cm x 5 cm area on the permeation side by using a high-precision shape measuring system KS-1100 manufactured by Keyence. More specifically, the height difference was measured at 30 locations each having a height difference of at least 10 $\mu$m, and the sum of the height value was divided by the number of locations measured to thereby determine the height difference on the permeation side of the separation membrane.

(Pitch and interval of the flow path member on the permeation side)

30 randomly chosen cross sections of the flow path members was taken in photograph by using a scanning electron microscope (S-800) (manufactured by Hitachi, Ltd.) at a magnification of 500, and horizontal distance between the peak of the flow path member on the permeation side of the separation membrane to the peak of the adjacent flow path member was measured for 200 locations to calculate the average. This average was the pitch.
The interval b was measured by the method as described above in the picture used for measuring the pitch.

(Projected area ratio of the flow path member)

The separation membrane of 5 cm x 5 cm was cut with the flow path member, and total projected area of the flow path member was measured by using a laser microscope (the magnification selected from the range of 10 to 500) and moving the stage. The projected area obtained by projecting the flow path member from the permeation side or the supply side was divided by the cut out area, and the quotient was used as the projected area ratio of the flow path member.

(Amount of water production)

The separation membrane or the separation membrane element was evaluated by using an aqueous solution of sodium chloride at a concentration of 500 mg/L at a pH of 6.5 for the raw water. The operation was conducted for 100 hours under the conditions including the operation pressure of 0.7 MPa, the operation temperature of 25°C, and the yield of 15%. The operation was continued for 10 minutes under the same conditions, and daily amount of water permeation (cubic meter) per unit area was calculated from the volume of the water permeated in the 10 minute operation. This value was used as the amount of water production ($m^3$/day).

(Degree of desalination (Degree of TDS removal))

The raw water and the sampled permeated water in the 10 minute operation in measuring the amount of the water production were evaluated for their TDS concentration by measuring conductivity. The degree of TDS removal was calculated by the following equation:

```
Degree of TDS removal (%) = 100 x {1-(TDS concentration in
the permeated water / TDS concentration in the raw water)}
```

(Percentage of the area with no flow path member)

For all wall-like members (flow path members on the permeation side), length L1 of the membrane leaf and distance L3 of the area with no wall-like member or with full surface coating from the end farthest from the water collection tube in relation to the leaf length were measured, and the percentage of the area with no flow path member was calculated by the following equation:

$$\text{Percentage of the area with no flow path member (\%)}$$
$$= L3/L1 \times 100$$

Average per one wall-like member was then determined, and in the following description, this average is referred to as the "percentage of the area with no flow path member".

(Coefficient of static friction)

The coefficient of static friction was measured by Slip Tester (No. 162-FS) manufactured by Toyo Seiki Co.,Ltd. The sample was placed at the site where the measurement is started, and the value when the surface of the flow path member was brought in frictional contact with the substrate was measured by using a load cell 50 N. The value of resistance at the initial rising was calculated for use as the coefficient of static friction.

(Adhesive force)

A sample having a width of 15 mm comprising the substrate and the flow path members securely fixed to the substrate was prepared. The substrate and a flow path member were partly peeled from each other at the adhesion surface, and the sample was placed on the tensile tester so that the sample will be at T at the measurement length of 150 mm. The tensile test was conducted at a speed of 50 mm per minute and at a temperature of 25°C and a relative humidity of 65%, and the average of the tensile force in the length of the measurement was used for the peel strength. When the substrate was fractured before the peeling in the peeling of the part of the flow path member from the substrate, the adhesive force was evaluated to be at least 1 N/m.

(Stability)

The separation membrane element produced was used for an operation using aqueous solution of sodium chloride at a concentration of 500 mg/L, a pH of 6.5, and a temperature of 25°C for the raw water, and the element was operated at an operation pressure of 0.7 MPa for 1 minute, and the operation was then stopped. This cycle of 1 minute water production and stopping of the water was repeated for 1000 times, and the amount of water production was thereafter measured to calculate the stability of the amount of water production by the following equation:

$$\text{Stability (\%)} = (\text{amount of water production after 1000 cycles})$$
$$/ (\text{initial amount of water production}) \times 100$$

(Example 1)

15.0% by weight solution of polysulfone in DMF was cast at room temperature (25°C) to a thickness of 180 $\mu$m on a nonwoven fabric (fiber diameter, 1 decitex; thickness, about 90 $\mu$m; air permeation, 1 cc/cm$^2$/sec; density, 0.80 g/cm$^3$) comprising polyethylene terephthalate fibers, and the cast membrane was immediately immersed in pure water and allowed to stand for 5 minutes. The membrane was then immersed in hot water at 80°C for 1 minute to produce a roll of porous support layer (thickness, 130 $\mu$m) comprising a fiber-reinforced polysulfone support membrane.

An aqueous solution containing 1.9% by weight of m-phenylenediamine (m-PDA) and 4.5% by weight of ε-caprolactam was then coated on the surface of the polysulfone membrane unwound from the porous support membrane roll, and excessive aqueous solution was removed from the surface of the support membrane by spraying nitrogen from an air nozzle. An n-decane solution containing 0.06% by weight of trimesoyl chloride at 25°C was then coated so that the surface of the support membrane was fully wet. The excessive solution was removed from the membrane by air blowing, and the membrane was washed with hot water (80°C) to obtain the separation membrane sheet.

Next, hot melt ethylene vinyl acetate RH-173 (manufactured by Rengo Co.,Ltd. having a density of 1.13 g/cm$^3$) was coated on the permeation side of the sheet by using a gravure roll at the resin temperature of 160° and transfer speed of 9.5 m/min while adjusting the back up roll to a temperature of 20°C. The gravure roll had true circles having a diameter of 0.5 mm discontinuously gravured in zigzag mode at a pitch of 1.0 mm at a projected area ratio of 0.32. By the coating, the flow path members were fixedly secured on the entire surface of the separation membrane at a height of 0.26 mm, an interval in the first direction and the second direction of the flow path members of 0.4 mm, a pitch of 0.9 mm, a projected area ratio of 0.32. In this procedure, the horizontal distance between the highest point of the high part of the separation membrane on the permeation side to the highest point of the adjacent high part was measured for two hundred locations, and the average was used as a pitch. It is to be noted that the substrate was fractured when the flow path member was peeled from the substrate, and the coefficient of static friction between the flow path member and the substrate was 0.35. The height difference between the adjacent flow path members was up to 30 $\mu$m.

The separation membrane was cut at a size of 43 cm$^2$, and placed in a pressure vessel. When the operation was conducted by using an aqueous solution of sodium chloride at a concentration of 500 mg/L for the raw water at an operation pressure of 0.7 MPa, an operation temperature of 25°C, and at a pH of 6.5 (yield, 15%), the amount of water production and the degree of desalination were 1.00 m$^3$/m$^2$/day and 98.2%, respectively. Both the test conditions and the results of the evaluation are shown in Table 1.

(Example 2)

The roll of the separation membrane prepared in Example 1 was folded and cut so that effective area in the separation membrane element would be 37.0 m$^2$. 26 leaves each having a width of 900 mm and a leaf length of 800 mm were prepared by using a net (thickness, 0.7 mm; pitch, 5 mm x 5 mm; fiber diameter, 350 $\mu$m; projected area ratio, 0.13) for the flow path member on the supply side.

The resulting leaf was spirally wound around the water collection tube made of ABS (width, 1,020 mm; diameter, 30 mm; 40 pores arranged in one row), and a film was wound around the periphery. After securing by a tape, edges were cut, edge plates were secured to the edges, and filaments were wound to prepare an 8 inch element.

The element was placed in a pressure vessel, and the operation was conducted under the conditions as described above to prepare the permeated water. The amount of water production and the degree of desalination were 35.8 m$^3$/day and 98.0%, respectively, and the stability was 99.3%.

(Example 3)

A separation membrane sheet was prepared by repeating the procedure of Example 1. The flow path member was formed on the surface of the substrate side of the resulting separation membrane sheet by using an applicator equipped with a comb shaped sim having a slit width of 0.5 mm and a pitch of 0.9 mm and adjusting the back up roll at a temperature of 20°C. The flow path member was formed in straight line so that it extends perpendicularly to the axial direction of the water collection tube and, when formed into the envelope membrane, the envelope membrane extends perpendicularly to the axial direction of the water collection tube from the inner end to the outer end in the winding direction. The coating used was hot melt ethylene vinyl acetate RH-173 (manufactured by Rengo Co.,Ltd. having a density of 1.13 g/cm$^3$), and this resin was coated at a resin temperature of 125°C and coating speed of 3 m/min in straight line shape to provide the flow path member having a height of 0.26 mm, a width of the flow path member of 0.5 mm, an angle formed between the longitudinal direction of the flow path member and the axial direction of the water collection tube of 90°, an interval in the first direction of the flow path member of 0.4 mm, a pitch of 0.9 mm, a projected area ratio of 0.55, and a percentage of the area with no flow path member of 0% was fixedly secured on the entire separation membrane.

The difference in the height between the adjacent flow path members did not exceed 30 $\mu$m.

The separation membrane was cut at a size of 43 cm$^2$, and placed in a pressure vessel. The operation was conducted under the conditions as described above to prepare the permeated water. The amount of water production and the degree of desalination were 1.00 m$^3$/day and 98.3%, respectively.

(Example 4)

The roll of the separation membrane prepared in Example 3 was folded and cut so that effective area in the separation membrane element would be 37.0 m$^2$. 26 leaves each having a width of 900 mm and a leaf length of 800 mm were prepared by using a net (thickness, 0.7 mm; pitch, 5 mm x 5 mm; fiber diameter, 350 $\mu$m; projected area ratio, 0.13) for the flow path member on the supply side.

The resulting leaf was spirally wound around the water collection tube made of ABS (width, 1,020 mm; diameter, 30 mm; 40 pores arranged in one line), and a film was wound around the outer periphery. After securing by a tape, edges were cut, edge plates were secured to the edges, and filaments were wound to prepare an 8 inch element.

The element was placed in a pressure vessel, and the operation was conducted under the conditions as described above to prepare the permeated water. The amount of water production and the degree of desalination were 35.0 m$^3$/day and 98.1%, respectively, and the stability was 99.5%.

(Example 5)

The roll of the separation membrane was prepared by fully repeating the procedure of Example 2 except that the Percentage of the area with no flow path member was 12%. The separation membrane element was also prepared by repeating the procedure of Example 2.
The element was placed in a pressure vessel, and the operation was conducted under the conditions as described above to prepare the permeated water. The amount of water production and the degree of desalination were 32.6 m$^3$/day and 98.1%, respectively, and the stability was 99.3%.

(Example 6)

The roll of the separation membrane was prepared by fully repeating the procedure of Example 2 except that the percentage of the area with no flow path member was 25%. The separation membrane element was also prepared by repeating the procedure of Example 2.
The element was placed in a pressure vessel, and the operation was conducted under the conditions as described above to prepare the permeated water. The amount of water production and the degree of desalination were 29.9 m$^3$/day and 98.1%, respectively, and the stability was 99.2%.

(Example 7)

The separation membrane element was prepared by fully repeating the procedure of Example 4 except that the height c of the flow path member on the permeation side was 0.32 mm, and the effective membrane area of the separation membrane element was 36 m$^2$.
The element was placed in a pressure vessel, and the operation was conducted under the conditions as described above to prepare the permeated water. The amount of water production and the degree of desalination were 35.5 m$^3$/day and 98.1%, respectively, and the stability was 99.5%.

(Example 8)

The separation membrane element was prepared by fully repeating the procedure of Example 4 except that the thickness of the net of the flow path member on the supply side was 0.95 mm, and the effective membrane area of the separation membrane element was 31 m$^2$.
The element was placed in a pressure vessel, and the operation was conducted under the conditions as described above to prepare the permeated water. The amount of water production and the degree of desalination were 28.1 m$^3$/day and 98.1%, respectively, and the stability was 99.5%.

(Example 9)

The roll of the separation membrane having the flow path members secured thereto prepared in Example 3 was folded and cut so that effective area in the separation membrane element would be 0.5 m$^2$. 2 leaves each having a width of 200 mm were prepared by using a net (thickness, 510 $\mu$m; pitch, 2 mm x 2 mm; fiber diameter, 255 $\mu$m; projected area ratio, 0.21) for the flow path member on the supply side.
The 2 leaves were wound around the water collection tube made of ABS (width, 300 mm; outer diameter, 17 mm; 8 pores arranged in 2 rows) to prepare the separation membrane element having leaves spirally wound therearound, and a film was wound around the outer periphery. After securing by a tape, edges were cut and edge plates were secured to the edges to prepare a 2 inch element.
The element was placed in a pressure vessel, and the operation was conducted under the conditions as described above to prepare the permeated water. The amount of water production and the degree of desalination were 0.235 m$^3$/day and 98.1%, respectively, and the stability was 99.7%.

(Example 10)

A separation membrane element was prepared by fully repeating the procedure of Example 9 except that the height c of the flow path member on the permeation side was 0.11 mm, and the effective membrane area of the separation membrane element was 0.56 m$^2$.
The element was placed in a pressure vessel, and the operation was conducted under the conditions as described above to prepare the permeated water. The amount of water production and the degree of desalination were 0.255 m$^3$/day and 98.1%, respectively, and the stability was 99.7%.

(Example 11)

A separation membrane element was prepared by fully repeating the procedure of Example 9 except that number of the membrane leaf was reduced to 1 (leaf length, 1, 600 mm), and the effective membrane area of the separation membrane element was 0.49 $m^2$.

The element was placed in a pressure vessel, and the operation was conducted under the conditions as described above to prepare the permeated water. The amount of water production and the degree of desalination were 0.240 $m^3$/day and 98.1%, respectively, and the stability was 99.7%.

(Example 12)

The roll of the separation membrane having the flow path members secured thereto prepared in Example 3 was folded and cut so that effective area in the separation membrane element would be 1.4 $m^2$. 6 leaves each having a width of 200 mm were prepared by using a net (thickness, 510 $\mu$m; pitch, 2 mm x 2 mm; fiber diameter, 255 $\mu$m; projected area ratio, 0.21) for the flow path member on the supply side.

The 2 leaves were wound around the water collection tube made of ABS (width, 300 mm; outer diameter, 17 mm; 8 pores arranged in 2 rows) to prepare the separation membrane element having leaves spirally wound therearound, and a film was wound around the outer periphery. After securing by a tape, edges were cut and edge plates were secured to the edges to prepare a 3 inch element.

The element was placed in a pressure vessel, and the operation was conducted under the conditions as described above to prepare the permeated water. The amount of water production and the degree of desalination were 0.713 $m^3$/day and 98.1%, respectively, and the stability was 99.6%.

(Example 13)

A separation membrane element was prepared by repeating the procedure of Example 4 after fixedly securing the flow path members to the separation membrane by fully repeating the procedure of Example 3 except that cross section of the flow path member was semicircular (width, 0.5 mm).

The element was placed in a pressure vessel, and the operation was conducted under the conditions as described above to prepare the permeated water. The amount of water production and the degree of desalination were 34.8 $m^3$/day and 98.1%, respectively, and the stability was 99.4%.

(Example 14)

A separation membrane element was prepared by repeating the procedure of Example 4 after preparing the separation membrane roll by fully repeating the procedure of Example 3 except that the substrate used was a polyester long fiber nonwoven fabric (fiber diameter, 1 decitex; thickness, about 90 $\mu$m; air permeation, 1.0 cc/cm$^2$/sec; fiber orientation of the surface layer on the side of the porous support layer, 40°; fiber orientation of the surface layer on the side opposite to the porous support layer, 20°; density, 0.80 g/cm$^3$).

The element was placed in a pressure vessel, and the operation was conducted under the conditions as described above to prepare the permeated water. The amount of water production and the degree of desalination were 35.1 $m^3$/day and 98.2%, respectively, and the stability was 99.6%.

(Example 15)

A separation membrane element was prepared by repeating the procedure of Example 4 after preparing the separation membrane roll by fully repeating the procedure of Example 3 except that the resin temperature in the securing of the flow path member was 120°C, the processing speed was 10.0 m/minute, and the adhesive force between the substrate and the flow path member was 7 N/m.

The element was placed in a pressure vessel, and the operation was conducted under the conditions as described above to prepare the permeated water. The amount of water production and the degree of desalination were 34.0 $m^3$/day and 97.9%, respectively, and the stability was 98.8%.

(Example 16)

A separation membrane element was prepared by repeating the procedure of Example 4 after preparing the separation membrane roll by fully repeating the procedure of Example 3 except that the resin temperature in the securing of the flow path member was 180°C, the processing speed was 3.0 m/minute, and the adhesive force between the substrate and the flow path member was 33 N/m.

The element was placed in a pressure vessel, and the operation was conducted under the conditions as described above to prepare the permeated water. The amount of water production and the degree of desalination were 34.5 m$^3$/day and 98.0%, respectively, and the stability was 99.1%.

(Example 17)

A separation membrane element was prepared by repeating the procedure of Example 4 after preparing the separation membrane roll by fully repeating the procedure of Example 3 except that the resin temperature in the securing of the flow path member was 200°C, the processing speed was 2.0 m/minute, and the adhesive force between the substrate and the flow path member was 58 N/m.

The element was placed in a pressure vessel, and the operation was conducted under the conditions as described above to prepare the permeated water. The amount of water production and the degree of desalination were 34.8 m$^3$/day and 98.0%, respectively, and the stability was 99.3%.

(Example 18)

A separation membrane element was prepared by repeating the procedure of Example 4 after fixedly securing the flow path members to the separation membrane by fully repeating the procedure of Example 3 except that the resin used for forming the flow path members on the permeation side had 3% of wax H1 (manufactured by Sasolwax) added thereto to thereby adjust the coefficient of static friction to 0.30.

The element was placed in a pressure vessel, and the operation was conducted under the conditions as described above to prepare the permeated water. The amount of water production and the degree of desalination were 35.0 m$^3$/day and 98.2%, respectively, and the stability was 99.5%.

(Example 19)

A separation membrane element was prepared by repeating the procedure of Example 4 after fixedly securing the flow path members to the separation membrane by fully repeating the procedure of Example 3 except that air blowing was conducted during the securing of the flow path member to thereby adjust the coefficient of static friction to 0.81.

The element was placed in a pressure vessel, and the operation was conducted under the conditions as described above to prepare the permeated water. The amount of water production and the degree of desalination were 35.1 m$^3$/day and 98.0%, respectively, and the stability was 99.5%.

(Example 20)

A separation membrane element was prepared by repeating the procedure of Example 4 after securing the flow path members by fully repeating the procedure of Example 3 except that the separation membrane was immersed in pure water at 25°C immediately after fixedly securing the flow path members to adjust the coefficient of static friction to 1.5.

The element was placed in a pressure vessel, and the operation was conducted under the conditions as described above to prepare the permeated water. The amount of water production and the degree of desalination were 35.3 m$^3$/day and 97.8%, respectively, and the stability was 99.4%.

(Example 21)

A separation membrane element was prepared by repeating the procedure of Example 4 after securing the flow path members by fully repeating the procedure of Example 3 except that the separation membrane was immersed in pure water at 5°C immediately after fixedly securing the flow path members to adjust the coefficient of static friction to 3.3.

The element was placed in a pressure vessel, and the operation was conducted under the conditions as described above to prepare the permeated water. The amount of water production and the degree of desalination were 35.6 m$^3$/day and 97.5%, respectively, and the stability was 99.4%.

(Example 22)

A separation membrane element was prepared by repeating the procedure of Example 4 after fixedly securing the flow path members to the separation membrane by fully repeating the procedure of Example 3 except that a nonwoven fabric of polyester fiber having a density of 0.55 g/cm$^3$ was used for the substrate.

The element was placed in a pressure vessel, and the operation was conducted under the conditions as described above to prepare the permeated water. The amount of water production and the degree of desalination were 34.3 m$^3$/day and 98.2 %, respectively, and the stability was 99.1%.

(Example 23)

A separation membrane element was prepared by repeating the procedure of Example 4 after fixedly securing the flow path members to the separation membrane by fully repeating the procedure of Example 3 except that a nonwoven fabric of polyester fiber having a density of 0.21 g/cm$^3$ was used for the substrate.

The element was placed in a pressure vessel, and the operation was conducted under the conditions as described above to prepare the permeated water. The amount of water production and the degree of desalination were 34.0 m$^3$/day and 98.3%, respectively, and the stability was 99.0%.

(Example 24)

A separation membrane element was prepared by repeating the procedure of Example 4 after fixedly securing the flow path members to the separation membrane by fully repeating the procedure of Example 3 except that a nonwoven fabric of polyester fiber having a density of 0.96 g/cm$^3$ was used for the substrate.

The element was placed in a pressure vessel, and the operation was conducted under the conditions as described above to prepare the permeated water. The amount of water production and the degree of desalination were 35.1 m$^3$/day and 98.0%, respectively, and the stability was 99.6%.

(Example 25)

The flow path member was fixedly secured to the separation membrane by fully repeating the procedure of Example 3 and the separation membrane element was prepared by repeating the procedure of Example 4 except that the predetermined part on the open side of the envelope membrane was adhered to the outer peripheral surface of the water collection tube having the holes, and the envelope membrane was spirally wound the water collection tube to prepare the wound membrane; the outer peripheral surface of the wound membrane was covered with a continuously extruded cylindrical net (thickness, 0.7 mm; pitch, 5 mm x 5 mm; fiber diameter, 350 $\mu$m; projected area ratio, 0.13); opposite edges of the covered wound membrane was cut, and a sealing plate (corresponding to the first edge plate 91) was attached to prevent the entry of the raw water; the raw water inlet was thereby provided only on the outer peripheral surface of the separation membrane element; and an edge plate corresponding to the second edge plate 92 was attached on the other end of the wound membrane to provide the separation membrane element of the second embodiment having the concentrate outlet on the other end of the separation membrane element.

The element was placed in a pressure vessel, and the operation was conducted under the conditions as described above to prepare the permeated water. The amount of water production and the degree of desalination were 33.3 m$^3$/day and 97.6%, respectively, and the stability was 99.5%.

(Example 26)

The procedure of Example 25 was fully repeated except that a sealing plate with holes (corresponding to the first edge plate 92) for adjusting the amount of raw water from the side surface of the separation membrane element was attached on the side surface of the separation membrane element to provide the raw water inlet at one end of the separation membrane element and on the outer peripheral surface, and to provide the concentrate outlet at the other end of the separation membrane element to thereby produce the separation membrane element of the third embodiment. The flow path member was thereby fixedly secured to the separation membrane by fully repeating the procedure of Example 3 and the separation membrane element was also prepared by repeating the procedure of Example 4.

The element was placed in a pressure vessel, and the operation was conducted under the conditions as described above to prepare the permeated water. The amount of water production and the degree of desalination were 33.7 m$^3$/day and 97.7%, respectively, and the stability was 99.5%.

(Comparative Example 1)

A separation membrane sheet was prepared by repeating the procedure of Example 1. By using the thus prepared separation membrane sheet, the separation membrane element was prepared by fully repeating the procedure of Example 2 except that continuously formed tricot (thickness, 280 $\mu$m; groove width, 400 $\mu$m; rib width, 300 $\mu$m; groove depth, 105 $\mu$m; made of polyethylene terephthalate) was used for the flow path member on the permeation side.

The element was placed in a pressure vessel, and the operation was conducted under the conditions as described above to prepare the permeated water. The amount of water production and the degree of desalination were 30.0 m$^3$/day and 98.3%, respectively, and the stability was 99.6%.

(Comparative Example 2)

A separation membrane element was prepared by repeating the procedure of Example 4 after preparing the separation membrane roll by fully repeating the procedure of Example 3 except that the resin temperature in the securing of the flow path member was 115°C, and the processing speed was 15.0 m/minute, and the adhesive force between the substrate and the flow path member was 0.8 N/m.

The element was placed in a pressure vessel, and the operation was conducted under the conditions as described above to prepare the permeated water. The amount of water production and the degree of desalination were 25.6 m$^3$/day and 97.9%, respectively, and the stability was 80.0%.

(Comparative Example 3)

A separation membrane element was prepared by repeating the procedure of Example 4 after preparing the separation membrane roll by fully repeating the procedure of Example 3 except that the resin temperature in the securing of the flow path member was 115°C, and the processing speed was 20.0 m/minute, and the adhesive force between the substrate and the flow path member was 0.1 N/m.

The element was placed in a pressure vessel, and the operation was conducted under the conditions as described above to prepare the permeated water. The amount of water production and the degree of desalination were 10.3 m$^3$/day and 97.7%, respectively, and the stability was 36.6%.

As evident from the results, the separation membranes and the separation membrane elements of Examples 1 to 26 have high water production performance, high operation stability, and excellent removal performance.

The conditions and the results of the evaluation for Examples 1 to 26 and Comparative Examples 1 to 3 are shown in Table 1 to Table 6.

Table 1

| | | Example 1 | Example 2 | Example 3 | Example 4 | Example 5 |
|---|---|---|---|---|---|---|
| Element | Embodiment | - | First | - | First | First |
| | Element size, number of leaves | - | 8 inches, 26 leaves | - | 8 inches, 26 leaves | 8 inches, 26 leaves |
| | Effective membrane area (m$^2$) | 37 | 37 | 37 | 37 | 37 |
| Separation membrane | Leaf length a (mm) | 800 | 800 | 800 | 800 | 800 |
| Substrate | Density (g/cm$^3$) | 0.80 | 0.80 | 0.80 | 0.80 | 0.80 |
| Flow path member on the permeation side | Arrangement | Zigzag, dotted | Zigzag, dotted | Straight line | Straight line | Straight line |
| | Material | Hot melt EVA RH-173 | Hot melt EVA RH-173 | Hot melt EVA RH-173 | Hot melt EVA RH-173 | Hot melt EVA RH-173 |

(continued)

| | | Example 1 | Example 2 | Example 3 | Example 4 | Example 5 |
|---|---|---|---|---|---|---|
| | Angle formed between the axial direction of the water collection tube and the flow path member (°) | 90 | 90 | 90 | 90 | 90 |
| | Shape of the cross section | Semicircle | Semicircle | Trapezoid | Trapezoid | Trapezoid |
| | Height c (mm) | 0.26 | 0.26 | 0.26 | 0.26 | 0.26 |
| | Upper base (mm) | - | - | 0.45 | 0.45 | 0.45 |
| | Lower base (mm) | 0.5 (diameter) | 0.5 (diameter) | 0.55 | 0.55 | 0.55 |
| | Interval b of the flow path member in the first direction (mm) | 0.40 | 0.40 | 0.40 | 0.40 | 0.40 |
| | Width d of the flow path member on the permeation side (mm) | 0.50 | 0.50 | 0.50 | 0.50 | 0.50 |
| | Interval e of the flow path member in the second direction (mm) | 0.40 | 0.40 | 0 | 0 | 0 |
| | Length f of the flow path member (mm) | - | - | - | 800 | 700 |
| | Pitch (mm) | 0.9 | 0.9 | 0.9 | 0.9 | 0.9 |
| | Projected area ratio (df/(b+d)(e+f)) | 0.32 | 0.32 | 0.55 | 0.55 | 0.55 |
| | Adhesive force (N/m) | Fracture of the substrate | Fracture of the substrate | Fracture of the substrate | Fracture of the substrate | Fracture of the substrate |
| | Coefficient of static friction with the substrate (-) | 0.35 | 0.35 | 0.35 | 0.35 | 0.35 |
| | Percentage of the area with no flow path member (%) | - | - | 0 | 0 | 12 |

(continued)

|  |  | Example 1 | Example 2 | Example 3 | Example 4 | Example 5 |
|---|---|---|---|---|---|---|
|  | Discontinuity of the flow path member/leaf | 0.4 mm × 1,000 locations | 0.4 mm × 1,000 locations | - | - | - |
| Flow path member on the supply side | Means used for providing the height difference | - | Net | - | Net | Net |
|  | Material | - | Polypropylene | - | Polypropylene | Polypropylene |
|  | Thickness (mm) | - | 0.70 | - | 0.70 | 0.70 |
|  | Fiber diameter (mm) | - | 0.35 | - | 0.35 | 0.35 |
|  | Pitch (mm) | - | 5 | - | 5 | 5 |
|  | Projected area ratio | - | 0.13 | - | 0.13 | 0.13 |
| Performance of separation membrane | Amount of water produced ($m^3/m^2$/day) | 1.00 | - | 1.00 | - | - |
|  | Degree of desalination (%) | 98.2 | - | 98.3 | - | - |
| Performance of the element | Amount of water produced ($m^3$/day) | - | 35.8 | - | 35.0 | 32.6 |
|  | Degree of desalination (%) | - | 98.0 | - | 98.1 | 98.1 |
|  | Stability (%) | - | 99.3 | - | 99.5 | 99.3 |

Table 2

| | | Example 6 | Example 7 | Example 8 | Example 9 | Example 10 |
|---|---|---|---|---|---|---|
| Element | Embodiment | First | First | First | First | First |
| | Element size, number of leaves | 8 inches, 26 leaves | 8 inches, 26 leaves | 8 inches, 26 leaves | 2 inches, 2 leaves | 2 inches, 2 leaves |
| | Effective membrane area (m$^2$) | 37 | 36 | 31 | 0.48 | 0.56 |
| Separation membrane | Leaf length a (mm) | 800 | 800 | 800 | 800 | 800 |
| Substrate | Density (g/cm$^3$) | 0.80 | 0.80 | 0.80 | 0.80 | 0.80 |

(continued)

| | | Example 6 | Example 7 | Example 8 | Example 9 | Example 10 |
|---|---|---|---|---|---|---|
| Flow path member on the permeation side | Arrangement | Straight line | Straight line | Straight line | Straight line | Straight line |
| | Material | Hot melt EVA RH-173 | Hot melt EVA RH-173 | Hot melt EVA RH-173 | Hot melt EVA RH-173 | Hot melt EVA RH-173 |
| | Angle formed between the axial direction of the water collection tube and the flow path member (°) | 90 | 90 | 90 | 90 | 90 |
| | Shape of the cross section | Trapezoid | Trapezoid | Trapezoid | Trapezoid | Trapezoid |
| | Height c (mm) | 0.26 | 0.32 | 0.26 | 0.26 | 0.11 |
| | Upper base (mm) | 0.45 | 0.45 | 0.45 | 0.45 | 0.45 |
| | Lower base (mm) | 0.55 | 0.55 | 0.55 | 0.55 | 0.55 |
| | Interval b of the flow path member in the first direction (mm) | 0.40 | 0.40 | 0.40 | 0.40 | 0.40 |
| | Width d of the flow path member on the permeation side (mm) | 0.50 | 0.50 | 0.50 | 0.50 | 0.50 |
| | Interval e of the flow path member in the second direction (mm) | 0 | 0 | 0 | 0 | 0 |
| | Length f of the flow path member (mm) | 600 | 800 | 800 | 800 | 800 |
| | Pitch (mm) | 0.9 | 0.9 | 0.9 | 0.9 | 0.9 |
| | Projected area ratio (df/(b+d)(e+f)) | 0.55 | 0.55 | 0.55 | 0.55 | 0.55 |
| | Adhesive force (N/m) | Fracture of the substrate | Fracture of the substrate | Fracture of the substrate | Fracture of the substrate | Fracture of the substrate |
| | Coefficient of static friction with the substrate (-) | 0.35 | 0.35 | 0.35 | 0.35 | 0.35 |
| | Percentage of the area with no flow path member (%) | 25 | 0 | 0 | 0 | 0 |
| | Discontinuity of the flow path member/leaf | - | - | - | - | - |

(continued)

| | | Example 6 | Example 7 | Example 8 | Example 9 | Example 10 |
|---|---|---|---|---|---|---|
| Flow path member on the supply side | Means used for providing the height difference | Net | Net | Net | Net | Net |
| | Material | Polypropylene | Polypropylene | Polyethylene | Polyethylene | Polyethylene |
| | Thickness (mm) | 0.70 | 0.70 | 0.95 | 0.51 | 0.51 |
| | Fiber diameter (mm) | 0.35 | 0.35 | 0.35 | 0.255 | 0.255 |
| | Pitch (mm) | 5 | 5 | 5 | 2 | 2 |
| | Projected area ratio | 0.13 | 0.13 | 0.13 | 0.21 | 0.21 |
| Performance of the element | Amount of water produced (m³/day) | 29.9 | 35.5 | 28.1 | 0.235 | 0.255 |
| | Degree of desalination (%) | 98.1 | 98.1 | 98.1 | 98.1 | 98.1 |
| | Stability (%) | 99.2 | 99.5 | 99.5 | 99.7 | 99.7 |

Table 3

| | | Example 11 | Example 12 | Example 13 | Example 14 | Example 15 |
|---|---|---|---|---|---|---|
| Element | Embodiment | First | First | First | First | First |
| | Element size, number of leaves | 2 inches, 2 leaves | 3 inches, 6 leaves | 8 inches, 26 leaves | 8 inches, 26 leaves | 8 inches, 26 leaves |
| | Effective membrane area (m$^2$) | 0.49 | 1.4 | 37 | 37 | 37 |
| Separation membrane | Leaf length a (mm) | 1600 | 800 | 800 | 800 | 800 |
| Substrate | Density (g/cm$^3$) | 0.80 | 0.80 | 0.80 | 0.80 | 0.80 |

| | | Example 11 | Example 12 | Example 13 | Example 14 | Example 15 |
|---|---|---|---|---|---|---|
| Flow path member on the permeation side | Arrangement | Straight line | Straight line | Straight line | Straight line | Straight line |
| | Material | Hot melt EVA RH-173 | Hot melt EVA RH-173 | Hot melt EVA RH-173 | Hot melt EVA RH-173 | Hot melt EVA RH-173 |
| | Angle formed between the axial direction of the water collection tube and the flow path member (°) | 90 | 90 | 90 | 90 | 90 |
| | Shape of the cross section | Trapezoid | Trapezoid | Semicircle | Trapezoid | Trapezoid |
| | Height c (mm) | 0.26 | 0.26 | 0.26 | 0.26 | 0.26 |
| | Upper base (mm) | 0.45 | 0.45 | - | 0.45 | 0.45 |
| | Lower base (mm) | 0.55 | 0.55 | 0.5 (diameter) | 0.55 | 0.55 |
| | Interval b of the flow path member in the first direction (mm) | 0.40 | 0.50 | 0.40 | 0.40 | 0.40 |
| | Width d of the flow path member on the permeation side (mm) | 0.50 | 0.50 | 0.50 | 0.50 | 0.50 |
| | Interval e of the flow path member in the second direction (mm) | 0 | 0 | 0 | 0 | 0 |
| | Length f of the flow path member (mm) | 800 | 800 | 800 | 800 | 800 |
| | Pitch (mm) | 0.9 | 0.9 | 1.0 | 1.0 | 0.9 |
| | Projected area ratio (df/(b+d)(e+f)) | 0.55 | 0.55 | 0.55 | 0.55 | 0.55 |
| | Adhesive force (N/m) | Fracture of the substrate | Fracture of the substrate | Fracture of the substrate | Fracture of the substrate | 7 |
| | Coefficient of static friction with the substrate (-) | 0.35 | 0.35 | 0.35 | 0.35 | 0.35 |
| | Percentage of the area with no flow path member (%) | 0 | 0 | 0 | 0 | 0 |
| | Discontinuity of the flow path member/leaf | - | - | - | - | - |

EP 2 735 357 B1

(continued)

| | | Example 11 | Example 12 | Example 13 | Example 14 | Example 15 |
|---|---|---|---|---|---|---|
| Flow path member on the supply side | Means used for providing the height difference | Net | Net | Net | Net | Net |
| | Material | Polyethylene | Polyethylene | Polypropylene | Polypropylene | Polypropylene |
| | Thickness (mm) | 0.51 | 0.51 | 0.70 | 0.70 | 0.70 |
| | Fiber diameter (mm) | 0.255 | 0.255 | 0.35 | 0.35 | 0.35 |
| | Pitch (mm) | 2 | 2 | 5 | 5 | 5 |
| | Projected area ratio | 0.21 | 0.21 | 0.13 | 0.13 | 0.13 |
| Performance of the element | Amount of water produced ($m^3$/day) | 0.240 | 0.713 | 34.8 | 35.1 | 34.0 |
| | Degree of desalination (%) | 98.1 | 98.1 | 98.1 | 98.2 | 97.9 |
| | Stability (%) | 99.7 | 99.6 | 99.4 | 99.6 | 98.8 |

Table 4

| | | Example 16 | Example 17 | Example 18 | Example 19 | Example 20 |
|---|---|---|---|---|---|---|
| Element | Embodiment | First | First | First | First | First |
| | Element size, number of leaves | 8 inches, 26 leaves | 8 inches, 26 leaves | 8 inches, 26 leaves | 8 inches, 26 leaves | 8 inches, 26 leaves |
| | Effective membrane area (m$^2$) | 37 | 37 | 37 | 37 | 37 |
| Separation membrane | Leaf length a (mm) | 800 | 800 | 800 | 800 | 800 |
| Substrate | Density (g/cm$^3$) | 0.80 | 0.80 | 0.80 | 0.80 | 0.80 |

(continued)

| | | Example 16 | Example 17 | Example 18 | Example 19 | Example 20 |
|---|---|---|---|---|---|---|
| Flow path member on the permeation side | Arrangement | Straight line | Straight line | Straight line | Straight line | Straight line |
| | Material | Hot melt EVA RH-173 | Hot melt EVA RH-173 | Hot melt EVA RH-173 | Hot melt EVA RH-173 | Hot melt EVA RH-173 |
| | Angle formed between the axial direction of the water collection tube and the flow path member (°) | 90 | 90 | 90 | 90 | 90 |
| | Shape of the cross section | Trapezoid | Trapezoid | Trapezoid | Trapezoid | Trapezoid |
| | Height c (mm) | 0.26 | 0.26 | 0.26 | 0.26 | 0.26 |
| | Upper base (mm) | 0.45 | 0.45 | 0.45 | 0.45 | 0.45 |
| | Lower base (mm) | 0.55 | 0.55 | 0.55 | 0.55 | 0.55 |
| | Interval b of the flow path member in the first direction (mm) | 0.40 | 0.40 | 0.40 | 0.40 | 0.40 |
| | Width d of the flow path member on the permeation side (mm) | 0.50 | 0.50 | 0.50 | 0.50 | 0.50 |
| | Interval e of the flow path member in the second direction (mm) | 0 | 0 | 0 | 0 | 0 |
| | Length f of the flow path member (mm) | 800 | 800 | 800 | 800 | 800 |
| | Pitch (mm) | 0.9 | 0.9 | 0.9 | 0.9 | 0.9 |
| | Projected area ratio (df/(b+d)(e+f)) | 0.55 | 0.55 | 0.55 | 0.55 | 0.55 |
| | Adhesive force (N/m) | 33 | 58 | Fracture of the substrate | Fracture of the substrate | Fracture of the substrate |
| | Coefficient of static friction with the substrate (-) | 0.35 | 0.35 | 0.30 | 0.81 | 1.5 |
| | Percentage of the area with no flow path member (%) | 0 | 0 | 0 | 0 | 0 |
| | Discontinuity of the flow path member/leaf | - | - | - | - | - |

(continued)

| | | Example 16 | Example 17 | Example 18 | Example 19 | Example 20 |
|---|---|---|---|---|---|---|
| Flow path member on the supply side | Means used for providing the height difference | Net | Net | Net | Net | Net |
| | Material | Polypropylene | Polypropylene | Polypropylene | Polypropylene | Polypropylene |
| | Thickness (mm) | 0.70 | 0.70 | 0.70 | 0.70 | 0.70 |
| | Fiber diameter (mm) | 0.35 | 0.35 | 0.35 | 0.35 | 0.35 |
| | Pitch (mm) | 5 | 5 | 5 | 5 | 5 |
| | Projected area ratio | 0.13 | 0.13 | 0.13 | 0.13 | 0.13 |
| Performance of the element | Amount of water produced ($m^3$/day) | 34,5 | 34.8 | 35.0 | 35.1 | 35.3 |
| | Degree of desalination (%) | 98.0 | 98.0 | 98.2 | 98.0 | 97.8 |
| | Stability (%) | 99.1 | 99.3 | 99.5 | 99.5 | 99.4 |

Table 5

| | | Example 21 | Example 22 | Example 23 | Example 24 | Example 25 |
|---|---|---|---|---|---|---|
| Element | Embodiment | First | First | First | First | Second |
| | Element size, number of leaves | 8 inches, 26 leaves | 8 inches, 26 leaves | 8 inches, 26 leaves | 8 inches, 26 leaves | 8 inches, 26 leaves |
| | Effective membrane area ($m^2$) | 37 | 37 | 37 | 37 | 37 |
| Separation membrane | Leaf length a (mm) | 800 | 800 | 800 | 800 | 800 |
| Substrate | Density ($g/cm^3$) | 0.80 | 0.55 | 0.21 | 0.96 | 0.80 |

(continued)

| | | Example 21 | Example 22 | Example 23 | Example 24 | Example 25 |
|---|---|---|---|---|---|---|
| Flow path member on the permeation side | Arrangement | Straight line | Straight line | Straight line | Straight line | Straight line |
| | Material | Hot melt EVA RH-173 | Hot melt EVA RH-173 | Hot melt EVA RH-173 | Hot melt EVA RH-173 | Hot melt EVA RH-173 |
| | Angle formed between the axial direction of the water collection tube and the flow path member (°) | 90 | 90 | 90 | 90 | 90 |
| | Shape of the cross section | Trapezoid | Trapezoid | Trapezoid | Trapezoid | Trapezoid |
| | Height c (mm) | 0.26 | 0.26 | 0.26 | 0.26 | 0.26 |
| | Upper base (mm) | 0.45 | 0.45 | 0.45 | 0.45 | 0.45 |
| | Lower base (mm) | 0.55 | 0.55 | 0.55 | 0.55 | 0.55 |
| | Interval b of the flow path member in the first direction (mm) | 0.40 | 0.40 | 0.40 | 0.40 | 0.40 |
| | Width d of the flow path member on the permeation side (mm) | 0.50 | 0.50 | 0.50 | 0.50 | 0.50 |
| | Interval e of the flow path member in the second direction (mm) | 0 | 0 | 0 | 0 | 0 |
| | Length f of the flow path member (mm) | 800 | 800 | 800 | 800 | 800 |
| | Pitch (mm) | 0.9 | 0.9 | 0.9 | 0.9 | 0.9 |
| | Projected area ratio (df/(b+d)(e+f)) | 0.55 | 0.55 | 0.55 | 0.55 | 0.55 |
| | Adhesive force (N/m) | Fracture of the substrate | Fracture of the substrate | Fracture of the substrate | 68 | Fracture of the substrate |
| | Coefficient of static friction with the substrate (-) | 3.3 | 0.35 | 0.35 | 0.35 | 0.35 |
| | Percentage of the area with no flow path member (%) | 0 | 0 | 0 | 0 | 0 |
| | Discontinuity of the flow path member/leaf | - | - | - | - | - |

(continued)

| | | Example 21 | Example 22 | Example 23 | Example 24 | Example 25 |
|---|---|---|---|---|---|---|
| Flow path member on the supply side | Means used for providing the height difference | Net | Net | Net | Net | Net |
| | Material | Polypropylene | Polypropylene | Polypropylene | Polypropylene | Polypropylene |
| | Thickness (mm) | 0.70 | 0.70 | 0.70 | 0.70 | 0.70 |
| | Fiber diameter (mm) | 0.35 | 0.35 | 0.35 | 0.35 | 0.35 |
| | Pitch (mm) | 5 | 5 | 5 | 5 | 5 |
| | Projected area ratio | 0.13 | 0.13 | 0.13 | 0.13 | 0.13 |
| Performance of the element | Amount of water produced ($m^3$/day) | 35.6 | 34.3 | 34.0 | 35.1 | 33.3 |
| | Degree of desalination (%) | 97.5 | 98.2 | 98.3 | 98.0 | 97.6 |
| | Stability (%) | 99.4 | 99.1 | 99.0 | 99.6 | 99.5 |

Table 6

| | | Example 26 | Comparative Example 1 | Comparative Example 2 | Comparative Example 3 |
|---|---|---|---|---|---|
| Element | Embodiment | Third | First | First | First |
| | Element size, number of leaves | 8 inches, 26 leaves | 8 inches, 26 leaves | 8 inches, 26 leaves | 8 inches, 26 leaves |
| | Effective membrane area (m$^2$) | 37 | 37 | 27 | 27 |
| Separation membrane | Leaf length a (mm) | 800 | 800 | 800 | 800 |
| Substrate | Density (g/cm$^3$) | 0.80 | 0.80 | 0.80 | 0.80 |
| Flow path member on the permeation side | Arrangement | Straight line | - | Straight line | Straight line |
| | Material | Hot melt EVA RH-173 | - | Hot melt EVA RH-173 | Hot melt EVA RH-173 |
| | Angle formed between the axial direction of the water collection tube and the flow path member (°) | 90 | - | 90 | 90 |
| | Shape of the cross section | Trapezoid | - | Trapezoid | Trapezoid |
| | Height c (mm) | 0.26 | - | 0.26 | 0.26 |
| | Upper base (mm) | 0.45 | - | 0.45 | 0.45 |
| | Lower base (mm) | 0.55 | - | 0.55 | 0.55 |
| | Interval b of the flow path member in the first direction (mm) | 0.40 | - | 0.40 | 0.40 |
| | Width d of the flow path member on the permeation side (mm) | 0.50 | - | 0.50 | 0.50 |
| | Interval e of the flow path member in the second direction (mm) | 0 | - | 0.00 | 0.00 |
| | Length f of the flow path member (mm) | 800 | - | 800 | 800 |
| | Pitch (mm) | 0.9 | - | 1.4 | 1.0 |
| | Projected area ratio (df/(b+d)(e+f)) | 0.55 | - | 0.32 | 0.55 |
| | Adhesive force (N/m) | Fracture of the substrate | | 0.8 | 0.1 |
| | Coefficient of static friction with the substrate (-) | 0.35 | - | 0.35 | 0.35 |
| | Percentage of the area with no flow path member (%) | 0 | - | 0 | 0 |
| | Discontinuity of the flow path member/leaf | - | - | - | - |

(continued)

|  |  | Example 26 | Comparative Example 1 | Comparative Example 2 | Comparative Example 3 |
|---|---|---|---|---|---|
| Flow path member on the supply side | Means used for providing the height difference | Net | Net | Net | Net |
|  | Material | Polypropylene | Polypropylene | Polypropylene | Polypropylene |
|  | Thickness (mm) | 0.70 | 0.70 | 1.10 | 1.10 |
|  | Fiber diameter (mm) | 0.35 | 0.35 | 0.35 | 0.35 |
|  | Pitch (mm) | 5 | 5 | 5 | 5 |
|  | Projected area ratio | 0.13 | 0.13 | 0.21 | 0.13 |
| Performance of the element | Amount of water produced (m³/day) | 33.7 | 30.0 | 25.6 | 10.3 |
|  | Degree of desalination (%) | 97.7 | 98.3 | 97.9 | 97.7 |
|  | Stability (%) | 99.5 | 99.6 | 80.0 | 36.6 |

[Industrial Utility Field]

The membrane element of the present invention is particularly preferable for use in the desalination of the brine and sea water.

[Explanation of the numerals]

1, 7 separation membrane
11 envelope membrane
2 separation membrane sheet
21 supply side surface
22 permeation side surface
201 substrate
202 porous support layer
203 separation functional layer
31 flow path member on the permeation side
32 flow path member on the supply side
33 impregnated area
4 separation membrane leaf
5 flow path on the permeation side
6 water collection tube
71 supply side surface
72 permeation side surface
81 cover
82 porous member
91 edge plate (having no holes)
92 edge plate (having the holes)
a length of the separation membrane (leaf)
b interval in the width direction of the flow path member on the permeation side
c height difference of the flow path member on the permeation side
d width of the flow path member on the permeation side
e interval in the longitudinal direction of the flow path member on the permeation side
f length of the flow path member on the permeation side
R2 area including the top to the last flow path members of the permeation side aligned from the inside to the outside in the winding direction of the separation membrane
R3 area where the flow path members of the permeation side are not provided at the outer end in the winding direction of the separation membrane
L1 length of the entire separation membrane (the length a)
L2 length of the R2
L3 length of the R3
100 separation membrane element
100A separation membrane element (first embodiment)
100b separation membrane element (second embodiment)
100c separation membrane element (third embodiment)
101 raw water
102 permeated water
103 concentrated water

**Claims**

1. A separation membrane comprising
a separation membrane sheet at least comprising a substrate and a separation functional layer, and
a plurality of flow path members having a composition different from both, the composition of the substrate and the composition of the separation functional layer,
wherein the plurality of flow path members are impregnated into the substrate on the side opposite in thickness direction to the separation functional layer, and the adhesive force between the substrate and each of the flow path members is at least 1 N/m, the adhesive force being measured as follows:

a sample having a width of 15 mm comprising the substrate and the flow path member securely fixed to the substrate is prepared, the substrate and the flow path member are partly peeled from each other at the adhesion surface, and the sample is placed on a tensile tester so that the sample will be at T at the measurement length of 150 mm, wherein the tensile test is conducted at a speed of 50 mm per minute and at a temperature of 25°C and a relative humidity of 65%, and the average of the tensile force in the length of the measurement is used for the peel strength, wherein when the substrate is fractured before the peeling in the peeling of the part of the flow path member from the substrate, the adhesive force is evaluated to be at least 1 N/m,
wherein a height c, which is a difference in the height between the highest part of the flow path member and the surface on a permeation side of the separation membrane sheet in the cross section perpendicular to a second direction, which is the longitudinal direction of the separation membrane, is at least 0.03 mm and up to 0.4 mm,
wherein the height c is the value obtained by measuring the height of the flow path member for at least 30 locations and calculating the average value thereof,
wherein a width d of the flow path member is at least 0.2 mm and up to 2 mm,
wherein the width d of the flow path member is measured as described below:

first, an average of the maximum width and the minimum width of the one flow path member is calculated in one cross section perpendicular to a first direction which is the width direction of the separation membrane, wherein when the flow path member has thinner upper part and thicker lower part, the width of the lower part and the width of the upper part of the flow path member are measured and the average is calculated, wherein such average is calculated for at least 30 cross sections, and arithmetic mean is calculated to thereby determine the width d per one membrane,
wherein an interval b, which is an interval between adjacent flow path members and which corresponds to the width of the flow path, is at least 0.2 mm and up to 5 mm,
wherein when the width of one flow path is not constant in one cross section, namely, when the side surfaces of the two adjacent flow path members are not parallel, average of the maximum width and the minimum width of one flow path in one cross section is measured to calculate the average, wherein when the flow path member is trapezoid with the shorter upper base and longer lower base in the cross section perpendicular to the second direction, the distance between the upper parts of the adjacent two flow path members and the distance between the lower parts of the adjacent two flow path members are first measured to calculate the average, wherein the interval between the flow path members is measured for the cross section at 30 or more arbitrary locations to calculate the average for each cross section, and then, arithmetic average of the thus obtained average may be calculated to determine the interval b.

2. A separation membrane according to claim 1 wherein the coefficient of static friction between the flow path member and the substrate is up to 3.5.

3. A separation membrane according to claim 1 or 2 wherein the flow path member has a density higher than that of the substrate.

4. A separation membrane according to any one of claims 1 to 3 wherein the difference in the density between the flow path member and the substrate is in excess of 0 g/cm$^3$ and up to 1.5 g/cm$^3$.

5. A separation membrane according to any one of claims 1 to 4 wherein the substrate comprises a nonwoven fabric and the nonwoven fabric has a density of 0.2 to 0.9 g/cm$^3$.

6. A separation membrane according to any one of claims 1 to 5 wherein the height of the flow path member from the separation membrane sheet is at least 30 $\mu$m and up to 800 $\mu$m.

7. A separation membrane according to any one of claims 1 to 6 wherein the difference in height between adjacent flow path members is up to 100 $\mu$m.

8. A separation membrane according to any one of claims 1 to 7 wherein the flow path member is made of a thermoplastic resin.

9. A separation membrane according to any one of claims 1 to 8 wherein the substrate is a long-fiber nonwoven fabric.

10. A separation membrane according to claim 9 wherein the separation membrane has a porous support layer between the long-fiber nonwoven fabric and the separation functional layer, and the fibers in the surface layer of the long fiber nonwoven fabric opposite to the side in contact with the porous support layer is more highly orientated in the formation direction of the long-fiber nonwoven fabric than the fibers in the surface layer of the long-fiber nonwoven fabric in contact with the porous support layer.

11. A separation membrane element having a water collection tube and a separation membrane according to any one of claims 1 to 10, wherein
the separation membrane is arranged with the width direction thereof coinciding with the length direction of the water collection tube in such a manner that the separation membrane is wound around the water collection tube.

## Patentansprüche

1. Trennmembran umfassend:

eine Trennmembranfolie, die mindestens ein Substrat und eine Trennfunktionsschicht aufweist, und
eine Vielzahl von Strömungswegelementen mit einer Zusammensetzung, die sich sowohl von der Zusammensetzung des Substrats als auch von der Zusammensetzung der Trennfunktionsschicht unterscheidet,
wobei die Vielzahl von Strömungswegelementen auf der der Trennfunktionsschicht in Richtung der Dicke entgegengesetzten Seite in das Substrat imprägniert ist, und die Adhäsionskraft zwischen dem Substrat und jedem der Strömungswegelemente mindestens 1 N/m beträgt, wobei die Adhäsionskraft wie folgt gemessen wird:
eine Probe mit einer Breite von 15 mm, die das Substrat und das Strömungswegelement, das sicher an dem Substrat befestigt ist, aufweist, wird hergestellt, das Substrat und das Strömungswegelement werden an der Haftfläche teilweise voneinander abgezogen, und die Probe wird auf einen Zugtester gelegt, so dass die Probe bei T bei einer Messlänge von 150 mm ist, wobei der Zugtest mit einer Geschwindigkeit von 50 mm pro Minute und bei einer Temperatur von 25 °C und einer relativen Luftfeuchtigkeit von 65% durchgeführt wird, und der Durchschnitt der Zugkraft in der Länge der Messung für die Abziehfestigkeit verwendet wird, wobei, wenn das Substrat vor dem Abziehen beim Abziehen des Teils des Strömungswegelements vom Substrat bricht, die Adhäsionskraft als mindestens 1 N/m bewertet wird,
wobei eine Höhe c, die ein Höhenunterschied zwischen dem höchsten Teil des Strömungswegelements und der Oberfläche auf einer Permeationsseite der Trennmembranfolie im Querschnitt senkrecht zu einer zweiten Richtung ist, die die Längsrichtung der Trennmembran ist, mindestens 0,03 mm und bis zu 0,4 mm beträgt,
wobei die Höhe c der Wert ist, der durch Messen der Höhe des Strömungswegelements an mindestens 30 Stellen und Berechnen des Durchschnittswerts davon erhalten wird,

wobei eine Breite d des Strömungswegelements mindestens 0,2 mm und bis zu 2 mm beträgt,
wobei die Breite d des Strömungswegelements wie nachstehend beschrieben gemessen wird:

zunächst wird ein Durchschnitt der maximalen Breite und der minimalen Breite des einen Strömungswegelements in einem Querschnitt senkrecht zu einer ersten Richtung berechnet, die die Breitenrichtung der Trennmembran ist, wobei, wenn das Strömungswegelement einen dünneren oberen Teil und einen dickeren unteren Teil hat, die Breite des unteren Teils und die Breite des oberen Teils des Strömungswegelements gemessen werden und der Durchschnitt berechnet wird, wobei ein solcher Durchschnitt für mindestens 30 Querschnitte berechnet wird, und das arithmetische Mittel berechnet wird, um dadurch die Breite d pro Membran zu bestimmen,
wobei ein Intervall b, das ein Intervall zwischen benachbarten Strömungswegelementen ist und der Breite des Strömungsweges entspricht, mindestens 0,2 mm und bis zu 5 mm beträgt;
wobei, wenn die Breite eines Strömungsweges in einem Querschnitt nicht konstant ist, nämlich wenn die Seitenflächen der zwei benachbarten Strömungswegelemente nicht parallel sind, der Durchschnitt der maximalen Breite und der minimalen Breite eines Strömungsweges in einem Querschnitt gemessen wird, um den Durchschnitt zu berechnen, wobei, wenn das Strömungswegelement trapezförmig mit der kürzeren oberen Basis und der längeren unteren Basis im Querschnitt senkrecht zur zweiten Richtung ist, der Abstand zwischen den oberen Teilen der benachbarten zwei Strömungswegelemente und der Abstand zwischen den unteren Teilen der benachbarten zwei Strömungswegelemente zuerst gemessen wird, um den Durchschnitt zu berechnen, wobei das Intervall zwischen den Strömungswegelementen für den Querschnitt an 30 oder mehr beliebigen Stellen gemessen wird, um den Durchschnitt für jeden Querschnitt zu berechnen, und dann der arithmetische Durchschnitt des so erhaltenen Durchschnitts berechnet werden kann, um das Intervall b zu bestimmen.

2. Trennmembran nach Anspruch 1, wobei der Haftreibungskoeffizient zwischen dem Strömungswegelement und dem Substrat bis zu 3,5 beträgt.

3. Trennmembran nach Anspruch 1 oder 2, wobei das Strömungswegelement eine höhere Dichte als die des Substrats hat.

4. Trennmembran nach einem der Ansprüche 1 bis 3, wobei der Unterschied in der Dichte zwischen dem Strömungswegelement und dem Substrat 0 g/cm$^3$ übersteigt und bis zu 1,5 g/cm$^3$ beträgt.

5. Trennmembran nach einem der Ansprüche 1 bis 4, wobei das Substrat ein Vlies aufweist, und das Vlies eine Dichte von 0,2 bis 0,9 g/cm$^3$ hat.

6. Trennmembran nach einem der Ansprüche 1 bis 5, wobei die Höhe des Strömungswegelements über der Trenn-membranfolie mindestens 30 $\mu$m und bis zu 800 $\mu$m beträgt.

7. Trennmembran nach einem der Ansprüche 1 bis 6, wobei der Höhenunterschied zwischen benachbarten Strö-mungswegelementen bis zu 100 $\mu$m beträgt.

8. Trennmembran nach einem der Ansprüche 1 bis 7, wobei das Strömungswegelement aus einem thermoplastischen Harz hergestellt ist.

9. Trennmembran nach einem der Ansprüche 1 bis 8, wobei das Substrat ein langfaseriges Vlies ist.

10. Trennmembran nach Anspruch 9, wobei die Trennmembran eine poröse Trägerschicht zwischen dem langfaserigen Vlies und der Trennfunktionsschicht hat, und die Fasern in der Oberflächenschicht des langfaserigen Vlieses, die der Seite gegenüber liegt, die mit der porösen Trägerschicht in Kontakt steht, stärker in Formationsrichtung des langfaserigen Vlieses orientiert sind als die Fasern in der Oberflächenschicht des langfaserigen Vlieses, die in Kontakt mit der porösen Trägerschicht steht.

11. Trennmembranelement mit einem Wassersammelrohr und einer Trennmembran nach einem der Ansprüche 1 bis 10, wobei
die Trennmembran so angeordnet ist, dass ihre Breitenrichtung mit der Längenrichtung des Wassersammelrohrs so übereinstimmt, dass die Trennmembran um das Wassersammelrohr gewickelt ist.

**Revendications**

1. Membrane de séparation comprenant
une feuille de membrane de séparation comprenant au moins un substrat et une couche fonctionnelle de séparation, et
une pluralité d'éléments de trajet d'écoulement ayant une composition différente de la composition du substrat et de la composition de la couche fonctionnelle de séparation toutes deux,
où la pluralité d'éléments de trajet d'écoulement sont imprégnés dans le substrat sur le côté opposé dans la direction de l'épaisseur à la couche fonctionnelle de séparation, et la force d'adhésion entre le substrat et chacun des éléments de trajet d'écoulement est d'au moins 1 N/m, la force d'adhésion étant mesurée comme suit :

un échantillon ayant une largeur de 15 mm comprenant le substrat et l'élément de trajet d'écoulement solidement fixé au substrat est préparé, le substrat et l'élément de trajet d'écoulement sont partiellement détachés l'un de l'autre au niveau de la surface d'adhésion, et l'échantillon est placé sur un testeur de traction de sorte que l'échantillon soit à T à la longueur de mesure de 150 mm, où l'essai de traction est effectué à une vitesse de 50 mm par minute et à une température de 25°C et une humidité relative de 65%, et la moyenne de la force de traction dans la longueur de la mesure est utilisée pour la résistance au pelage, où lorsque le substrat est fracturé avant le pelage lors du pelage de la partie de l'élément de trajet d'écoulement du substrat, la force d'adhésion est évaluée à au moins 1 N/m,
où une hauteur c, qui est une différence de la hauteur entre la partie la plus haute de l'élément de trajet d'écoulement et la surface sur un côté de perméation de la feuille de membrane de séparation dans la section transversale perpendiculaire à une deuxième direction, qui est la direction longitudinale de la membrane de séparation, varie d'au moins 0,03 mm jusqu'à 0,4 mm,
où la hauteur c est la valeur obtenue en mesurant la hauteur de l'élément de trajet d'écoulement pour au moins 30 emplacements et en calculant leur valeur moyenne,
où une largeur d de l'élément de trajet d'écoulement varie d'au moins 0,2 mm jusqu'à 2 mm,
où la largeur d de l'élément de trajet d'écoulement est mesurée comme décrit ci-dessous :

tout d'abord, une moyenne de la largeur maximale et de la largeur minimale d'un élément de trajet d'écoulement est calculée dans une section transversale perpendiculaire à une première direction qui est la direction de la largeur de la membrane de séparation, où lorsque l'élément de trajet d'écoulement a une partie supérieure plus mince et une partie inférieure plus épaisse, la largeur de la partie inférieure et la largeur de la partie supérieure de l'élément de trajet d'écoulement sont mesurées et la moyenne est calculée, où une telle moyenne est calculée pour au moins 30 sections transversales, et la moyenne arithmétique est calculée pour ainsi déterminer la largeur d par membrane,
où un intervalle b, qui est un intervalle entre des éléments de trajet d'écoulement adjacents et qui correspond à la largeur du trajet d'écoulement, varie d'au moins 0,2 mm jusqu'à 5 mm,
où lorsque la largeur d'un trajet d'écoulement n'est pas constante dans une section transversale, à savoir, lorsque les surfaces latérales des deux éléments de trajet d'écoulement adjacents ne sont pas parallèles, la moyenne de la largeur maximale et de la largeur minimale d'un trajet d'écoulement dans une section transversale est mesurée pour calculer la moyenne, où lorsque l'élément de trajet d'écoulement est trapézoïdal avec une base supérieure plus courte et une base inférieure plus longue dans la section transversale perpendiculaire à la deuxième direction, la distance entre les parties supérieures des deux éléments de trajet d'écoulement adjacents et la distance entre les parties inférieures des deux éléments de trajet d'écoulement adjacents sont d'abord mesurées pour calculer la moyenne, où l'intervalle entre les éléments de trajet d'écoulement est mesuré pour la section transversale à 30 emplacements arbitraires ou plus pour calculer la moyenne pour chaque section transversale, puis, la moyenne arithmétique de la moyenne ainsi obtenue peut être calculée pour déterminer l'intervalle b.

2. Membrane de séparation selon la revendication 1, dans laquelle le coefficient de frottement statique entre l'élément de trajet d'écoulement et le substrat peut aller jusqu'à 3,5.

3. Membrane de séparation selon la revendication 1 ou 2, dans laquelle l'élément de trajet d'écoulement a une densité supérieure à celle du substrat.

4. Membrane de séparation selon l'une quelconque des revendications 1 à 3, dans laquelle la différence de la densité entre l'élément de trajet d'écoulement et le substrat est supérieure à 0 g/cm$^3$ et peut aller jusqu'à 1,5 g/cm$^3$.

**5.** Membrane de séparation selon l'une quelconque des revendications 1 à 4, dans laquelle le substrat comprend un tissu non tissé et le tissu non tissé a une densité comprise entre 0,2 et 0,9 g/cm$^3$.

**6.** Membrane de séparation selon l'une quelconque des revendications 1 à 5, dans laquelle la hauteur de l'élément de trajet d'écoulement à partir de la feuille de membrane de séparation varie d'au moins 30 $\mu$m jusqu'à 800 $\mu$m.

**7.** Membrane de séparation selon l'une quelconque des revendications 1 à 6, dans laquelle la différence de hauteur entre les éléments de trajet d'écoulement adjacents peut atteindre 100 $\mu$m.

**8.** Membrane de séparation selon l'une quelconque des revendications 1 à 7, dans laquelle l'élément de trajet d'écoulement est réalisé en une résine thermoplastique.

**9.** Membrane de séparation selon l'une quelconque des revendications 1 à 8, dans laquelle le substrat est un tissu non tissé à fibres longues.

**10.** Membrane de séparation selon la revendication 9, dans laquelle la membrane de séparation a une couche de support poreuse entre le tissu non tissé à fibres longues et la couche fonctionnelle de séparation, et les fibres dans la couche de surface du tissu non tissé à fibres longues à l'opposé du côté en contact avec la couche de support poreuse ont une orientation plus élevée dans la direction de formation du tissu non tissé à fibres longues que les fibres dans la couche de surface du tissu non tissé à fibres longues en contact avec la couche de support poreuse.

**11.** Élément de membrane de séparation ayant un tube collecteur d'eau et une membrane de séparation selon l'une quelconque des revendications 1 à 10, dans lequel
la membrane de séparation est agencée avec sa direction de la largeur coïncidant avec la direction de la longueur du tube collecteur d'eau de manière à ce que la membrane de séparation soit enroulée autour du tube collecteur d'eau.

Fig. 1

Fig. 2

Fig. 3

Fig. 4

Fig. 5

Fig. 6

In side ← → Out side

MD (winding direction)

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006247453 A
- JP 2010099590 A
- US 5804280 A
- EP 2002880 A1
- EP 0081182 A2
- JP 2011092905 A
- JP 4414216 B
- JP 4011928 A
- JP 11226366 A

**Non-patent literature cited in the description**

- Research and Development Progress Report. Office of Saline Waters, 1968